(19) Europäisches Patentamt
European Patent Office
Office européen des brevets

(11) **EP 3 137 870 B1**

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **15723164.8**

(22) Anmeldetag: **30.04.2015**

(51) Internationale Patentklassifikation (IPC):
**G01M 17/007** (2006.01)

(52) Gemeinsame Patentklassifikation (CPC):
**G01M 17/007**

(86) Internationale Anmeldenummer:
**PCT/EP2015/059551**

(87) Internationale Veröffentlichungsnummer:
**WO 2015/166067 (05.11.2015 Gazette 2015/44)**

(54) **SYSTEM UND VERFAHREN ZUR ANALYSE DER ENERGIEEFFIZIENZ EINES FAHRZEUGS**

SYSTEM AND METHOD FOR ANALYSING THE ENERGY EFFICIENCY OF A VEHICLE

SYSTÈME ET MÉTHODE POUR L'ANALYSE D'EFFICACITÉ ÉNERGÉTIQUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2014 DE 102014006322**

(43) Veröffentlichungstag der Anmeldung:
**08.03.2017 Patentblatt 2017/10**

(73) Patentinhaber: **AVL List GmbH**
**8020 Graz (AT)**

(72) Erfinder:
• **LIST, Helmut**
**A-8010 Graz (AT)**
• **SCHOEGGL, Peter**
**A-8151 Hitzendorf (AT)**
• **FRAIDL, Guenter Karl**
**A-8020 Graz (AT)**
• **BOGNER, Erik**
**A-8046Graz (AT)**
• **OSWALD, Mario**
**A-8072 Fernitz (AT)**

(74) Vertreter: **Hahner, Ralph et al**
**Wallinger Ricker Schlotter Tostmann**
**Patent- und Rechtsanwälte Partnerschaft mbB**
**Zweibrückenstraße 5-7**
**80331 München (DE)**

(56) Entgegenhaltungen:
**DE-A1-102009 048 615   DE-A1-102009 048 615**
**US-A1- 2013 073 113   US-B1- 8 155 868**
**US-B1- 8 155 868**

**Beschreibung**

Die Erfindung betrifft ein System und ein Verfahren zur Analyse einer Energieeffizienz eines Fahrzeugs mit zumindest einer Antriebseinrichtung, welche eingerichtet ist, durch Energieumwandlung mechanische Antriebskraft zu erzeugen. Die Erfindung betrifft des Weiteren ein Verfahren zur Analyse eines Fahrzeugbetriebsverhaltens eines Fahrzeugs.

Die Energieeffizienz von Fahrzeugen gewinnt immer mehr an Bedeutung, sowohl als Kaufargument für Kunden vor dem Hintergrund steigender Energiekosten als auch für den Gesetzgeber vor dem Hintergrund des Zwangs der Reduzierung der Umweltbelastung durch Fahrzeuge im Rahmen von Klimaschutzzielen.

Auf der Kundenseite gewinnt auch das Thema der Gesamtkosten des Fahrzeugeigentums an Bedeutung. Zusätzlich werden rein subjektive Kriterien wie gesellschaftliche Trends, soziale Akzeptanz, etc. aber insbesondere das "positive Fahrerlebnis" verstärkt zu entscheidenden Kaufargumenten. Somit erweitert sich der Focus von der Darstellung rein technischer Zielwerte wie Leistung und Kraftstoffverbrauch um die Erfüllung eines positiven subjektiven Kundenerlebnisses, dem Erlebnis "Auto". Die Kunden nehmen dabei die Eigenschaften und Werte des Fahrzeugs, wie Design, Ergonomie, Bedienbarkeit, Infotainment und Assistenzsysteme, Sicherheitsgefühl, Emission, NVH-Komfort, Agilität, Leistung, Energieeffizienz und Fahrbarkeit in ganzheitlichem Kontext als Fahrzeugbetriebsverhalten wahr.

Hinsichtlich der rein technischen Aspekte stellt sicherlich die $CO_2$-Gesetzgebung den wesentlichsten Technologietreiber dar. Die zukünftigen $CO_2$- bzw. Verbrauchsflottengrenzwerte konvergieren weltweit auf einem sich ständig reduzierenden Niveau. Dies erfordert einerseits komplexe Antriebssysteme mit hochflexiblen Komponenten, bedingt aber andererseits auch eine verstärkt individualisierte Anpassung an unterschiedlichste Randbedingungen und resultiert in einer vieldimensionalen Diversifizierung der Antriebssysteme (verschiedene Energieträger, unterschiedlicher Elektrifizierungsgrad, Variantenvielfalt, etc.).

Zukünftig erlaubt zudem die Vernetzung des Antriebsstranges des Fahrzeugs mit der gesamten Fahrzeugumgebung (Engl.: Connected Powertrain) eine optimale Anpassung der Betriebsstrategien an die reale Verkehrssituation und Umweltbedingungen, insbesondere die Topographie. Die Fülle der Informationen von Fahrzeug-Infotainment, Fahrerassistenzsystemen bis zu Fahrzeug-zu-Fahrzeug-Kommunikation (Car2Car) oder Fahrzeug-zu-X-Kommunikation (Car2X) ermöglicht es, viele Szenarien schon vorab zu berechnen und so den Optimierungshorizont massiv zu erweitern. Damit ergibt sich die Möglichkeit, die vielfältigen Freiheitsgrade zukünftiger Antriebssysteme in wesentlich höherem Ausmaß zur Reduzierung des Energieverbrauchs zu nutzen. Dies bedingt jedoch hochkomplexe Betriebsstrategien mit extrem gesteigertem Entwicklungs-, Kalibrier- und vor allem Validierungsaufwand.

Es hat sich herausgestellt, dass die Kriterien Energieeffizienz, Emission, Fahrbarkeit (Englisch: Driveability) und NVH-Komfort (Englisch: Noise-Vibration-Harshness/Geräusch-Vibration-Rauheit) bezüglich der Kundenzufriedenheit und zur Erfüllung der gesetzlichen Rahmenbedingungen eine herausragende Rolle spielen. Diese Aufzählung ist jedoch nicht abschließend und weitere der eingangs aufgezählten Kriterien können aufgrund zukünftiger Entwicklungen an Bedeutung gewinnen.

Die EP 0 846 945 A2 betrifft ein Verfahren zur Analyse des Fahrverhaltens von Kraftfahrzeugen. Eine Untersuchung der Fahrbarkeit eines Kraftfahrzeugs kann an einem Prüfstand mit relativ geringem Aufwand vorgenommen werden, wenn folgende Schritte durchgeführt werden: Durchführen von Messungen an einem realen Fahrzeug zur Gewinnung von Messgrößen über das Fahrverhalten, Ableiten von mindestens einer Bewertungsgröße, die die Fahrbarkeit des Fahrzeugs ausdrücken, als Funktion einer oder mehrerer Messgrößen, Erstellen eines Simulationsmodells zur Darstellung von Abhängigkeiten zwischen den einzelnen Messgrößen und insbesondere zur Berechnung der Bewertungsgrößen aus einem Satz vorbestimmter Messgrößen, die sowohl am realen Fahrzeug als auch an einem Prüfstand ermittelbar sind und Kalibrieren eines Dynamik-Prüfstands anhand des Simulationsmodells.

Die US 7,523,654 B2 betrifft ein Verfahren und eine Vorrichtung zum Bewerten von NVH-Charakteristiken eines mechanischen Systems, welches eine drehmomentübertragende Gesamtheit aufweist, welche antreibende und getriebene Bauteile aufweist, die antreibend zusammenwirken.

Die DE 10 2009 048 615 A1 betrifft ein Verfahren zum elektronischen Konfigurieren von Fahrzeugen, wobei

- ein streckenabhängiges Fahrprofil für das zu konfigurierende Fahrzeug bestimmt wird,
- die aufgrund dieses Fahrprofils zu erwartenden Energieflüsse am Fahrzeug simuliert und quantifiziert werden,
- einzelne, miteinander kompatibel Funktionsblöcke des Fahrzeugs in Abhängigkeit der im Fahrzeug zu erwartenden Energieflüsse bestimmt werden, wobei die Funktionsblöcke insbesondere energetische Eigenschaften eines im jeweiligen Funktionsblock enthaltenen Bauteils beschreiben,
- die einzelnen Funktionsblöcke zusammengesetzt und eine fahrprofilabhängige Teil- oder Gesamtenergiebilanz erstellt wird,
- einzelne Funktionsblöcke zur Optimierung der fahrprofilabhängigen Teil- oder der Gesamtenergiebilanz und/oder zur Variantenbildung solange ausgetauscht oder ersetzt werden, bis ein für das gewünschte Fahrprofil energieeffizientes Fahrzeug zusammengestellt ist.

Die WO 2014/062127 A1 betrifft ein System zur Benutzung von Betriebsdaten von zumindest einem Fahrzeug, aufweisend:

- eine Sammeleinrichtung, eingerichtet zum Sammeln von den Betriebsdaten, wobei die Betriebsdaten Informationen darüber umfassen, wie das zumindest eine Fahrzeug benutzt wurde;
- eine Recheneinrichtung, eingerichtet um einen Energieverbrauch c auf der Grundlage der Betriebsdaten in Form einer Energieverbrauchsmatrix für das zumindest eine Fahrzeug als Funktionen der Motordrehzahl und des Drehmoments für einen Antriebsstrang in dem zumindest einen Fahrzeug zu bestimmen;
- und eine Benutzungseinrichtung, eingerichtet um den Energieverbrauch c zu benutzen.

Die US 2007/0112475 A1 betrifft eine Vorrichtung zum Verwalten des Leistungsverbrauchs eines Fahrzeugs, eine Energieverwaltungslogik aufweisend, welche geeignet ist, um eine für den Fahrzeugmotor aufgebrachte Leistung auf der Grundlage von Informationen über die Umgebung des Fahrzeugs, Informationen über den Betriebszustand des Fahrzeugs, ein oder mehrere Steuereingaben und ein oder mehrere Betriebsparameter des Fahrzeugs zu berechnen.

Die US 8 571 748 B2 betrifft ein Verfahren zum Abschätzen eines vortriebsbezogenen Betriebsparameters eines Fahrzeugs für einen Streckenabschnitt, wobei das Verfahren aufweist:

- Abschätzen zumindest eines Betriebsparameters des Fahrzeugs für den Streckenabschnitt auf der Grundlage von Informationen über den Streckenabschnitt;
- Abschätzen der Vortriebs-bezogenen Betriebsparameter für das Straßensegment unter Benützung des zumindest einen geschätzten Betriebsparameters und zumindest einen fahrzeugspezifischen Parameters, wobei der zumindest eine fahrzeugspezifische Parameter bestimmt wird durch:
- Erfassen von Fahrdaten, um eine Vielzahl von Fahrzeugbetriebsparametern zu bestimmen, während das Fahrzeug in Betrieb ist;
- Benutzen von zumindest zwei der bestimmten Fahrzeugbetriebsparameter in einer vorbestimmten Beziehung, welche den zumindest einen fahrzeugspezifischen Parameter einschließt; und
- Bestimmen des zumindest einen fahrzeugspezifischen Parameters aus den Fahrdaten für die zumindest zwei Fahrzeugbetriebsparameter und der Beziehung,
- Identifizierung von verschiedenen Fahrphasen in den Fahrdaten, welche für die Vielzahl von Fahrzeugbetriebsparametern erfasst wurden, wobei zumindest ein fahrzeugspezifischer Parameter für Fahrzeugphasen bestimmt wird, wobei jeder identifizierte Fahrphase einem Satz von fahrzeugspezifischen Parametern zugeordnet wird, welche aus den jeweiligen Fahrdaten bestimmt werden, wobei die fahrzeugspezifischen Parameter, welche für alle identifizierten Fahrphasen bestimmt wurden, benutzt werden, um den Vortriebs-bezogenen Betriebsparameter zu schätzen.

Die Patentdokumente US 8 155 868 B1 und DE 10 2009 048 615 A1 offenbaren auch Systeme und Verfahren zur Analyse einer Energieeffizienz eines Fahrzeugs.

Um dem Verbraucher eine Orientierung in Bezug auf die Energieeffizienz zu geben, ist seit 1. Dezember 2011 die Verordnung zur $CO_2$-Kennzeichnung für Personenkraftfahrzeuge in der Bundesrepublik Deutschland in Kraft. Seitdem ist ein ausgestelltes oder zum Kauf oder zum Leasing angebotenes Fahrzeug mit dem zugehörigen $CO_2$-Label am Fahrzeug zu versehen, das dessen Energieeffizienzklasse kennzeichnet. Bei Fahrzeugen erfolgt die Größeneinteilung über das Fahrzeuggewicht. Dabei besteht ein unmittelbarer Zusammenhang zwischen der Energieeffizienz eines Fahrzeugs und den Emissionen des Fahrzeugs.

Um Fahrzeuge in Energieeffizienzklassen einzuordnen, wird der Referenzwert für den $CO_2$-Ausstoß zum Anmeldezeitpunt über das Gewicht eines Fahrzeuges bestimmt. Eine Aussage darüber, inwieweit die in ein Fahrzeug zur Fortbewegung gesteckte Energie effizient ausgenutzt wird, und welchen Beitrag einzelne Vorrichtungen A des Fahrzeugs wie der Antriebsstrang, die Lenkung, die Antriebseinrichtung oder auch die Nebenaggregate oder andere Einflussfaktoren auf die Energieeffizienz leisten, kann aus der Einteilung in eine Energieeffizienzklasse dagegen nicht gewonnen werden.

Auch die Emissionen an sich unterliegen immer strengeren gesetzlichen Regelungen. In der Europäischen Gemeinschaft traten die ersten einheitlichen Emissionsvorschriften 1970 in Kraft. Begrenzt wurden damals ausschließlich die Emissionen von Kohlenmonoxid und Kohlenwasserstoffen. 1977 wurden die Stickstoffoxide als zusätzlich begrenzende Abgasinhaltsstoffe eingeführt. Grenzwerte für Partikel (Ruß) aus Dieselmotoren wurden 1988 eingeführt. Für Lastkraftwagen und Busse wurden 1988 Grenzwerte für Abgasinhaltsstoffe erstmals europaweit festgelegt. Für Motorräder und Mopeds gibt es seit 1997 europaweit festgelegte Abgasgrenzwerte.

Die Abgasvorschriften wurden seit dem stufenweise verschärft. Diese Verschärfung betrifft die Art und Höhe der Emissionswerte und deren dauerhafte Einhaltung.

Die Werte für Verbrauch und Emissionen werden für das Überprüfen auf die gesetzlichen Normen in einem ebenfalls genormten Fahrzyklus getestet. Dieser ist seit Jahrzehnten für die Emissionsbestimmung bei der Zulassungsprüfung von Fahrzeugen auf dem Prüfstand die gängige Methode. In einer Laborumgebung werden mit klaren Rahmenbedingungen für Temperatur, Kraftstoff, Testzyklus bzw. Streckenprofil die Motoren und Fahrzeuge hinsichtlich minimaler Abgasemissionen und Kraftstoffverbräuche optimiert. Mit verbesserten Brennverfahren und dem Einsatz geeigneter Abgasnachbehandlung werden alle gesetzlichen Emissionslimits zum Anmeldezeitpunkt unterschritten. Der zum Anmeldezeitpunkt aktuelle neue europäische Fahrzyklus dauert insgesamt 1.180 Sekunden (knapp 20 Minuten). Er besteht aus einem 780 Sekunden dauernden City-Zyklus (städtische Bedingungen) und einem 400 Sekunden dauernden Überland-Zyklus (außerstädtische Bedingungen). Die Umgebungstemperatur beträgt während der Messung 20°C bis 30°C. Kaltstartbedingungen, Beschleunigung und Verzögerung werden erfasst und entsprechend interpoliert.

Die Bewertung des Verbrauchs und der Emission anhand des genormten Fahrzyklus stellt ein Durchschnittsprofil dar, um verschiedene Fahrzeuge untereinander vergleichen zu können. Die Fahrzyklen stimmen meist nur teilweise mit den individuellen Nutzungsprofilen von Kunden überein, insbesondere dann, wenn viel Kurzstrecken- und Stadtverkehr bei einem Kunden auftritt. Auch werden der Verbrauch und die Emission bei Geschwindigkeiten von über 120 km/h dabei nicht gemessen und fließen nicht in die Durchschnittsberechnung ein. Während eines Fahrzyklus zielt die Suche nach Ursachen für erhöhte Emissionen auf eine Optimierung des Gesamtzyklus.

Eine Aufgabe der Erfindung ist es, ein System und ein Verfahren bereitzustellen, welche eine allgemeingültige Analyse der Energieeffizienz eines Fahrzeugs ermöglichen. Insbesondere soll die Analyse nicht oder nur in geringem Maße von dem Fahrzeuggewicht und dem gefahrenen Fahrzyklus abhängen.

Diese Aufgabe wird durch ein System zur Analyse einer Energieeffizienz eines Fahrzeugs nach Anspruch 1 und durch ein entsprechendes Verfahren nach Anspruch 5 gelöst. Vorteilhafte Ausgestaltungen der erfindungsgemäßen Lehre werden in den Unteransprüchen beansprucht.

Die Erfindung basiert insbesondere auf dem Ansatz, eine Segmentierung komplexer Fahrverläufen in einzelne Fahrelemente bzw. Fahrzustände oder Abfolgen von Fahrzuständen vorzunehmen und anhand dieser Segmentierung einen Kennwert zu bestimmen. Die Anmelderin hat festgestellt, dass mit einer solchen segmentierten Analyse der Energieeffizienz des Fahrzeugs große Effizienzverbesserungen bei Fahrzeugen erreicht werden können, wenn eine Optimierung auf der Grundlage eines solchen Kennwerts vorgenommen wird.

Die Erfindung basiert des Weiteren insbesondere auf dem Ansatz, dass nicht nur die Energieeffizienz eines Fahrzeugs, sondern auch weitere Kriterien die subjektive Wahrnehmung des Fahrzeugs durch einen Fahrer bzw. Fahrzeuginsassen wesentlich beeinflussen. Daher soll zusätzlich ein Kennwert für das Fahrzeugbetriebsverhalten bestimmt werden. Hierbei ist es von Bedeutung, einzelne Fahrelemente bzw. Fahrzustände zu identifizieren, welche für einzelne Kriterien besonders aussagekräftig sind, wobei diese Eigenschaften bei jeweils relevanten Fahrelementen höher gewichtet werden als Eigenschaften, für welche das jeweilige Fahrelement nicht so relevant ist. Als Ergebnis wird hierbei ein Kennwert für das Fahrzeugbetriebsverhalten des Fahrzeugs ausgegeben.

Durch die Bestimmung eines allgemeingültigen Kennwerts kann eine Fahrzeugzulassung durch Messungen im realen Fahrbetrieb unabhängig von einem bestimmten Fahrzyklus erfolgen. Dies führt zu einer wesentlich besseren Vergleichbarkeit von Fahrzeugen verschiedener Fahrzeugklassen und zu Ergebnissen die den Verbrauch im realen Straßenverkehr besser abbilden. Des Weiteren wird der beherrschbare Testbereich Prüfstand um die teilweise stochastische Komponente Straßenfahrt (Engl.: Real-Drive) erweitert, d.h. eine Erweiterung des synthetischen Testzyklus um den zufälligen Realbetrieb mit einer unüberschaubaren Vielzahl unterschiedlicher Fahrzustände und Randbedingungen.

Verbrauch, Emissionen und die Energieeffizienz können erfindungsgemäß in Bezug auf einzelne Fahrzuständen, einer Mehrzahl gleichartiger Fahrzustände und/oder Abfolgen von verschiedenen Fahrzuständen des Fahrzeugs analysiert werden, so dass Einflüsse von Fahrzuständen auf die Energieeffizienz und das Fahrzeugbetriebsverhalten offen gelegt werden können.

Eine Antriebseinrichtung im Sinne der Erfindung ist eingerichtet, durch Energieumwandlung mechanische Antriebskraft zu erzeugen.

Der Begriff "Erfassen" im Sinne der Erfindung schließt ein Einlesen von Datensätzen, welche insbesondere durch Simulationen erzeugt sind, ein Vorgeben eines Betriebszustands eines Aggregats des Fahrzeugs und/oder ein Durchführen von Messungen an einem Fahrzeug oder auf einem Prüfstand ein.

Ein Fahrzustand im Sinne der Erfindung ist durch einen Wert oder mehrere Werte eines Parameters oder einer Konstellation oder mehrere Konstellationen von Werten mehrerer Parameter festgelegt, je nachdem, ob der Fahrzustand situativ betrachtet wird (zum Beispiel das Vorliegen einer Kurvenfahrt) oder ob ein Fahrzustand sich erst aus dem zeitlichen Verlauf von Parametern ergibt (zum Beispiel das Vorliegen eines Tip-Ins). Ein Fahrzustand im Sinne der Erfindung gibt insbesondere die Fahrdynamik des Fahrzeugs wider. Fahrzustände sind insbesondere Gleiten bei konstanter Geschwindigkeit, Beschleunigung, Kurvenfahrt, Parkfahrt, Geradeausfahrt, Leerlauf (Roll-Fahrt), Tip-In (plötzliches Gasgeben), Let-Off (plötzliche Gaswegnahme), Konstantfahrt, Schalten, Stillstand, Bergfahrt, Talfahrt, Elektrofahrt, Bremsen durch Rekuperation, mechanisches Bremsen oder auch eine Kombination wenigstens zweier dieser Fahrzustände. Die Fahrdynamik wird bei manchen der Fahrzustände auch durch die Antriebsart oder durch den Betriebszustand von Fahrzeugkomponenten bestimmt. So sind bei einem Vollhybridfahrzeug prinzipiell drei verschiedene Tip-In-Fahrzustände möglich, ein Tip-In, welcher mit der Verbrennungskraftmaschine gefahren wird, ein Tip-In, welcher mit der Elektromaschine gefahren wird und ein Tip-In, bei welchem die Elektromaschine als zusätzlicher Elektro-Boost eingesetzt wird. Einzelne Fahrzustände sind bis hin zum Betrachten einzelner Konstellationen verfeinerbar, so dass zum Beispiel auch Tip-Ins bei verschiedenen Gängen oder von verschiedenen Ausgangsdrehzahlen als unterschiedliche Fahrzustände unterschieden werden können.

Ein Fahrwiderstand im Sinne der Erfindung bezeichnet die Summe der Widerstände, die ein Landfahrzeug mit Hilfe einer Antriebskraft überwinden muss, um mit einer konstanten oder beschleunigten Geschwindigkeit auf einer horizontalen oder geneigten Ebene zu fahren. Der Fahrwiderstand setzt sich insbesondere aus den Komponenten Luftwiderstand, Rollwiderstand, Steigungswiderstand und/oder Beschleunigungswiderstand zusammen.

Eine Topographie im Sinne der Erfindung ist ein Gelände und gibt insbesondere die Neigung der Fahrbahn, den Kurvenverlauf einer Straße und die Höhe über Normalnull (z.B. dem Meeresspiegel) an.

Eine Vorrichtung A eines Fahrzeugs im Sinne der Erfindung ist ein Bauteil, insbesondere ein Nebenaggregat, eine Komponente, insbesondere eine Leistungselektronik oder eine Antriebseinrichtung, oder ein System, insbesondere eine Lenkung oder ein Antriebstrang.

Ein Fahrelement im Sinne der Erfindung ist vorzugsweise ein Fahrzustand. Weiterhin vorzugsweise kann für die Identifizierung eines Fahrelements die Entwicklung weiterer Parameter berücksichtigt werden, die die eingangs genannten Kriterien charakterisieren. Hierbei ist z.B. denkbar, dass ein Anstieg des ersten Parameters, welcher den Energieverbrauch des Fahrzeugs charakterisiert, auf ein besonders relevantes Fahrelement für den Energieverbrauch und damit für die Energieeffizienz hinweist.

Real-Drive im Sinne der Erfindung bedeutet realer Fahrbetrieb, insbesondere auf der Straße oder im Gelände. Bei teilsimulierten bzw. vollsimulierten Fahrzeugen kann Real-Drive auch die Abbildung einer solchen realen Fahrt, beispielsweise durch stochastische Methoden, auf einem Prüfstand bedeuten. Entsprechend sind Real-Drive-Emissionen, Emissionen, welche während einer (simulierten) realen Fahrt erzeugt werden, eine Real-Drive-Effizienz ist die Energieeffizienz des Fahrzeugs während eines (simulierten) realen Fahrbetriebs.

Das erfindungsgemäßen System weist eine Auswahleinrichtung, insbesondere Teil einer Datenverarbeitungseinrichtung, eingerichtet zum Festlegen wenigstens einer Vorrichtung A, deren Energieverbrauch beim Ermitteln des wenigstens einen Kennwerts zur Energieeffizienz des Fahrzeugs unberücksichtigt bleibt und eine vierte Einrichtung, insbesondere einen Sensor, insbesondere eingerichtet zum Erfassen eines weiteren, zweiten Parameters, welche den Energieverbrauch der wenigstens einen Vorrichtung A charakterisiert, auf, wobei die Verarbeitungseinrichtung des Weiteren eingerichtet ist, den Energieverbrauch des Fahrzeugs und den Energieverbrauch der wenigstens einen Vorrichtung A zu bereinigen. Neben einer Segmentierung komplexer Fahrverläufe in kleine bewertbare Einzelelemente ist auch diese Kategorisierung der Systemintegration des Gesamtfahrzeugs in verschiedene System-, Komponenten- und sogar Bauteilebenen eine Grundlage für effizientere Entwicklungsprozesse. Durch die Bereinigung des Energieverbrauchs des Fahrzeugs um den Energieverbrauch einer Vorrichtung A kann die Analyse der Energieeffizienz auf bestimmte Funktionen des Fahrzeugs bzw. Komponenten oder Systeme des Fahrzeugs, fokussiert werden. Beispielsweise lassen sich so alle Vorrichtungen A ausblenden, welche nicht zum Vortrieb des Fahrzeugs beitragen, z.B. alle Komfortfunktionen. Hierdurch kann z.B. die Effizienz des Antriebsstrangs bestimmt werden. Weiter vorzugsweise lassen sich alle Vorrichtungen A ausblenden, welche z.B. nicht zum Lenkungssystem des Fahrzeugs gehören. Hierdurch kann selektiv die Energieeffizienz des Lenkungssystems analysiert werden. In einer vorteilhaften Ausgestaltung des erfindungsgemäßen Systems weist dieses eine

fünfte Einrichtung, insbesondere eine Schnittstelle, eingerichtet zum Erfassen eines Sollwerts für den wenigstens einen Kennwert, insbesondere auf der Grundlage eines Fahrzeugmodells oder eines Referenzfahrzeugs, eine zweite Vergleichseinrichtung, insbesondere Teil einer Datenverarbeitungseinrichtung, eingerichtet zum Abgleich eines Kennwerts mit dem Sollwert und eine Ausgabeeinrichtung, insbesondere eine Anzeige, eingerichtet zum Ausgeben einer Bewertung der Energieeffizienz auf der Grundlage eines Abgleichs, auf.

Durch die Bewertung der Energieeffizienz können verschiedene Fahrzeuge auf einfache Weise miteinander verglichen werden.

In einer weiteren vorteilhaften Ausgestaltung des erfindungsgemäßen Systems weist dieses des Weiteren eine Speichereinrichtung, eingerichtet, eine Abfolge von Fahrzuständen zu speichern auf, und die Verarbeitungseinrichtung ist des Weiteren eingerichtet, beim Ermitteln des Kennwerts die Abfolge der Fahrzustände zu berücksichtigen.

Mit dieser Ausprägung des erfindungsgemäßen Systems können nicht nur Kennwerte auf der Grundlage von einzelnen Fahrelementen, insbesondere Fahrzuständen, bestimmt werden, sondern es kann auch der Einfluss von vorhergehenden und/oder nachfolgenden Fahrzuständen auf zu bewertende vorliegende Fahrzustände berücksichtigt werden. Zusätzlich können auch Kennwerte über Erfassungszeiträume ermittelt werden, welche mehrere Fahrzustände umfassen, wobei die jeweiligen zur Analyse herangezogenen Parameter über diese Zeiträume summiert oder integriert werden können.

In einer weiteren vorteilhaften Ausgestaltung des erfindungsgemäßen Systems ist die Verarbeitungseinrichtung des Weiteren eingerichtet, eine Zuordnung der Werte des ersten Datensatzes und den zweiten Datensatzes zu dem wenigstens einen vordefinierten Fahrzustand zu korrigieren, um eine Signallaufzeit und/oder um eine Laufzeit wenigstens eines Messmediums zum Erfassen des jeweiligen Datensatzes bis zum Sensor zu berücksichtigen.

Durch diese Ausprägung des erfindungsgemäßen Systems kann vermieden werden, dass erfasste Werte bzw. Messwerte falschen Fahrzuständen zugeordnet werden, bzw. dass Fahrelemente fehlerhaft identifiziert werden.

In einer vorteilhaften Ausgestaltung des erfindungsgemäßen Verfahrens weist dieses des Weiteren folgende Arbeitsschritte auf: Erfassen eines Sollwerts für wenigstens einen Kennwert, insbesondere auf der Grundlage eines Fahrzeugmodells oder eines Referenzfahrzeugs, Abgleichen des Kennwerts mit dem Sollwert und Ausgeben einer Bewertung der Energieeffizienz auf der Grundlage des Abgleichens.

Die Sollwertberechnung erfolgt vorzugsweise in einem mit der Fahrzeugmessung synchronisierten Gesamtfahrzeugmodell basierend auf der gemessenen Fahrzeug-Längsdynamik und unter Berücksichtigung der aktuellen Topographie sowie der Fahrwiderstände. Das Fahrzeugmodell beinhaltet vorzugsweise nicht nur die gesamte Hardwarekonfiguration, sondern auch die entsprechenden Betriebsstrategien. Dabei wird vorzugsweise eine Bilanzierung über alle Energieflüsse und Energiespeicher vorgenommen.

Die im Vorstehenden beschriebenen Aspekte der Erfindung und die dazugehörigen zur Weiterbildung des erfindungsgemäßen Systems offenbarten Merkmale gelten auch für die nachstehend beschriebene Aspekte der Erfindung und die dazugehörige Weiterbildung der erfindungsgemäßen Verfahren entsprechend und umgekehrt.

In einer vorteilhaften Ausgestaltung weist das erfindungsgemäße Verfahren des Weiteren die folgenden Arbeitsschritte auf: Erfassen eines Sollwerts für den wenigstens einen Kennwert, insbesondere auf der Grundlage eines Fahrzeugmodells oder eines Referenzfahrzeugs, Abgleichen des Kennwerts mit dem Sollwert und Ausgeben einer Bewertung der Energieeffizienz auf der Grundlage des Abgleichens.

In einer weiteren vorteilhaften Ausgestaltung des erfindungsgemäßen Verfahrens ist der zweite Parameter des Weiteren geeignet, einen Betriebszustand und/oder einen Energieverbrauch wenigstens einer Vorrichtung A des Fahrzeugs, insbesondere eines Nebenaggregats der wenigstens einen Antriebseinrichtung, einer Lenkung oder eines Antriebsstrangs und/oder eine Topgraphie einer Umgebung des Fahrzeugs zu charakterisieren.

Insbesondere durch eine Bestimmung der Topographie der Umgebung des Fahrzeugs kann eine Betriebsstrategie des Fahrzeugs auf eine Veränderung des Straßenverlaufs, welchem das Fahrzeug folgt, vor Erreichen des entsprechenden Straßenverlaufs, angepasst werden. Hierdurch können erhebliche Effizienzgewinne erreicht werden.

In einer weiteren vorteilhaften Ausgestaltung des erfindungsgemäßen Verfahrens ist der wenigstens eine zweite Parameter des Weiteren geeignet, einen Betriebszustand und/oder einen Energieverbrauch wenigstens einer Vorrichtung A des Fahrzeugs, insbesondere eines Nebenaggregats, der wenigstens einen Antriebseinrichtung, einer Lenkung, oder eines Antriebsstrangs zu charakterisieren und das erfindungsgemäße Verfahren weist des Weiteren die Arbeitsschritte auf: Festlegen der wenigstens einen Vorrichtung A, deren Energieverbrauch beim Ermitteln des wenigstens einen Kennwerts zur Energieeffizienz des Fahrzeugs unberücksichtigt bleibt, und Bereinigen des Energieverbrauchs des Fahrzeugs um den Energieverbrauch der wenigstens einen Vorrichtung A.

Wie in Bezug auf eine vorteilhafte Ausgestaltung des erfindungsgemäßen Systems beschrieben, kann die Effizienz des Gesamtfahrzeugs hierdurch auch die Effizienz des Systems, einer Komponente, oder sogar eines Bauteils des Fahrzeugs heruntergebrochen werden.

In einer weiteren vorteilhaften Ausgestaltung des erfindungsgemäßen Verfahrens ist die wenigstens eine Vorrichtung A für den Fahrbetrieb des Fahrzeugs notwendig oder erfüllt eine vom Fahrbetrieb unabhängige Funktion.

Für den Fahrbetrieb des Fahrzeugs notwendige Vorrichtungen A sind z.B. alle Komponenten des Antriebsstrangs oder auch die gesetzlich vorgeschriebenen Vorrichtungen A wie das Lichtsystem, das Bremssystem oder aktive Sicherheitseinrichtungen. Vom Fahrbetrieb unabhängige Funktionen sind in erster Linie insbesondere Komfortfunktionen, welche beispielsweise die Klimatisierung oder das Infotainment bereitstellt.

In einer weiteren vorteilhaften Ausgestaltung des erfindungsgemäßen Verfahrens ist die wenigstens eine Antriebseinrichtung eine Brennkraftmaschine oder eine Elektromaschine mit Brennstoffzellensystem und der erste Parameter gibt wenigstens eine Emission der Brennkraftmaschine oder des Brennstoffzellensystems an.

Nach dieser Ausgestaltung kann der Energieverbrauch des Fahrzeugs über die Emissionsmessung, insbesondere über die $CO_2$-Emissionen bestimmt werden. Vorzugsweise werden hierbei auch die Energiezu- und Energieabflüsse einer Energiespeichereinrichtung berücksichtigt.

In einer weiteren vorteilhaften Ausgestaltung des erfindungsgemäßen Verfahrens ist der wenigstens eine Parameter zusätzlich geeignet, eine Emission, eine Fahrbarkeit und/oder ein NVH-Komfort des Fahrzeugs zu charakterisieren und das Verfahren weist des Weiteren den folgenden Arbeitsschritt auf: Auswählen wenigstens eines Betriebsmodus des Fahrzeugs, von welchem die Bewertung zusätzlich abhängt, aus einem der folgende Betriebsmodi: Effizienzorientierter Betriebsmodus, emissionsreduzierter Betriebsmodus, fahrbarkeitsorientierter Betriebsmodus, NVH-Komfort-orientierter Betriebsmodus.

In einer weiteren vorteilhaften Ausgestaltung des erfindungsgemäßen Verfahrens werden die Arbeitsschritte so lange ausgeführt, dass sich der dritte Datensatz über mehrere verschiedene Fahrzustände erstreckt.

In einer weiteren vorteilhaften Ausgestaltung weist das erfindungsmäße Verfahren den weitern Arbeitsschritt auf: Erfassen der Abfolge der Fahrzustände, wobei beim Ermitteln des Kennwerts die Abfolge der Fahrzustände berücksichtigt wird.

Wie bereits in Bezug auf eine vorteilhafte Ausgestaltung des erfindungsgemäßen Systems erläutert, kann hierdurch der Einfluss auf Fahrzustände untereinander berücksichtigt werden.

In einer weiteren vorteilhaften Ausgestaltung des erfindungsgemäßen Verfahrens werden die Werte des ersten Datensatzes und/oder des zweiten Datensatzes über die Zeitdauer des jeweiligen Fahrzustands integriert.

Diese Aufintegration bzw. Summierung der Werte ermöglicht das Ermitteln eines Kennwerts über die Gesamtdauer eines Fahrzustands.

In einer weiteren vorteilhaften Ausgestaltung werden die mehrerer dritter Datensätze für eine gleiche Art von Fahrzustandsermittlung des wenigstens einen Kennwerts zusammengefasst.

Hierdurch kann eine statistische Auswertung von identischen Fahrzuständen vorgenommen werden.

In einer weiteren vorteilhaften Ausgestaltung weist das erfindungsgemäße Verfahren des Weiteren folgenden Arbeitsschritt auf: Korrigieren einer Zuordnung der Werte des ersten Datensatzes und des zweiten Datensatzes zu dem wenigstens einen vordefinierten Fahrzustand, um eine Signallaufzeit und/oder um eine Laufzeit wenigstens eines Messmediums zum Erfassen des jeweiligen Datensatzes bis zu einem Sensor zu berücksichtigen.

In einer weiteren vorteilhaften Ausgestaltung des erfindungsgemäßen Verfahrens werden die Parameter der Datensätze in einem Real-Drive-Betrieb des Fahrzeugs erfasst, wobei bevorzugt das Fahrzeug eine nach stochastischen Prinzipien ausgewählte reale Fahrstrecke zurücklegt, bevorzugt ein reales Fahrzeug eine nach stochastischen Prinzipen ausgewählte wenigstens teilweise simulierte Fahrstrecke zurücklegt, noch bevorzugter ein wenigstens teilweise simuliertes Fahrzeug eine nach stochastischen Prinzipien ausgewählte wenigstens teilweise simulierte Fahrstrecke zurücklegt und am bevorzugtesten ein simuliertes Fahrzeug eine nach stochastischen Prinzipen ausgewählte simulierte Fahrstrecke zurücklegt.

Ein Real-Drive-Betrieb eines Fahrzeugs im Sinne der Erfindung ist ein Betrieb eines Fahrzeugs nach den Gesichtspunkten einer realen Alltagsfahrt eines Benutzers, beispielsweise zur Arbeit, zum Einkaufen oder in den Urlaub.

Das erfindungsgemäße Verfahren ermöglicht das Abkoppeln des Versuchsbetriebs von Fahrzyklen, wobei Kennwerte in Abhängigkeit von einzelnen Fahrelementen, insbesondere Fahrzuständen, bestimmt werden. Auf der Grundlage dieser Kenntnis kann ein beliebiger Fahrzyklus, welcher einen Real-Drive-Betrieb eines Fahrzeugs darstellt, zusammengesetzt werden.

In einer weiteren vorteilhaften Ausgestaltung des erfindungsgemäßen Verfahrens wird ein Kennwert nur dann ermittelt, wenn wenigstens ein vorbestimmter Fahrzustand vorliegt und/oder wenn der erste Datensatz oder der zweite Datensatz vorbestimmte Kriterien erfüllen.

Dies ermöglicht die Auswahl für eine des relevanten Fahrzustands bzw. der relevanten Fahrelemente zur Ermittlung eines Kennwerts oder einer Bewertung.

In einer weiteren vorteilhaften Ausgestaltung des erfindungsgemäßen Verfahrens wer den die Messwerte mehrerer zweiter Datensätze für eine gleiche Art von Fahrtzustand zur Ermittlung des wenigstens einen Kennwertes zusammengefasst.

Das erfindungsgemäße Verfahren kann sowohl zur Beurteilung eines realen Fahrzeugs als auch zur Beurteilung eines teilweise simulierten bzw. emulierten oder vollständig simulierten bzw. emulierten Fahrzeugs herangezogen werden. Im Falle des realen Fahrzeugs wird dieses einem realen Betrieb unterzogen und die Parameter, welche die Datensätze bilden, werden durch Messungen mit Sensoren ermittelt.

Im Falle der teilweisen Simulation wird für das Gesamtfahrzeug ein Simulationsmodell erstellt, anhand dessen Parameterwerte für wenigstens einen Parameter eines Datensatzes rechnerisch ermittelt werden. Die Tests werden insbesondere auf Prüfständen durchgeführt, wobei Parameterwerte für jene Parameter bzw. Datensätze, für die Messungen möglich sind, vorzugsweise durch eine Messung bestimmt werden.

Bei einer vollständig simulierten Beurteilung wird das gesamte Fahrzeug simuliert und der Testbetrieb findet als reine Simulation ohne Prüfstand statt, wobei für einzelne Komponenten oder Systeme des Fahrzeugs gemessene Parameterwerte in die Simulation eingehen können. Im Falle der Beurteilung eines realen Fahrzeugs kann das reale Fahrzeug sowohl im Straßen- bzw. Geländebetrieb oder auch auf einer simulierten Straße bzw. simulierten Gelände auf dem Rollenprüfstand betrieben werden. Entsprechend dieser Möglichkeiten des Einsatzes des erfindungsgemäßen Systems und des erfindungsgemäßen Verfahrens für Beurteilungen eines realen Fahrzeugs einer teilweisen Simulation des Fahrzeugs oder einer vollständigen Simulation des Fahrzeugs bedeutet der Begriff "Erfassen" im Sinne der Erfindung ein Einlesen von Datensätzen, welche insbesondere durch Simulation erzeugt wurden, ein Vorgeben eines Betriebszustands eines Aggregats eines realen oder simulierten Fahrzeugs und/oder Durchführen von Messungen an realen Fahrzeugen oder an Komponenten bzw. Systemen eines realen Fahrzeugs auf einem Prüfstand.

Weitere Merkmale, Vorteile und Anwendungsmöglichkeiten der Erfindung ergeben sich aus der nachfolgenden Beschreibung in Zusammenhang mit den Figuren. Es zeigen:

Figur 1 eine teilweise schematische Darstellung eines Fahrzeugs mit einer Ausführungsform des erfindungsgemäßen Systems zur Beurteilung und/oder Optimierung einer Energieeffizienz eines Fahrzeugs;

Figur 2 ein teilweise schematisches Blockdiagramm einer Ausführungsform des erfindungsgemäßen Verfahrens zur Analyse einer Energieeffizienz eines Fahrzeugs;

Figur 3 ein teilweise schematisches Diagramm einer Kategorisierung der Systemintegration eines gesamten Fahrzeugs nach einer Ausführungsform des erfindungsgemäßen Systems und des erfindungsgemäßen Verfahrens zur Analyse einer Energieeffizienz eines Fahrzeugs;

Figur 4 ein teilweise schematisches Diagramm einer Segmentierung eines Fahrprofils einer Ausführungsform des erfindungsgemäßen Systems und des erfindungsgemäßen Verfahrens zur Analyse einer Energieeffizienz eines Fahrzeugs;

Figur 5 ein teilweise schematisches Blockdiagramm einer Ausführungsform des erfindungsgemäßen Verfahrens zur Analyse eines Fahrzeugbetriebsverhaltens eines Fahrzeugs; und

Figur 6 ein teilweise schematisches Diagramm einer Segmentierung eines Fahrprofils nach einer Ausführungsform des erfindungsgemäßen Verfahrens zur Analyse eines Fahrzeugbetriebsverhaltens eines Fahrzeugs.

Figuren 7 bis 18 beziehen sich auf weitere Aspekte der Erfindung.

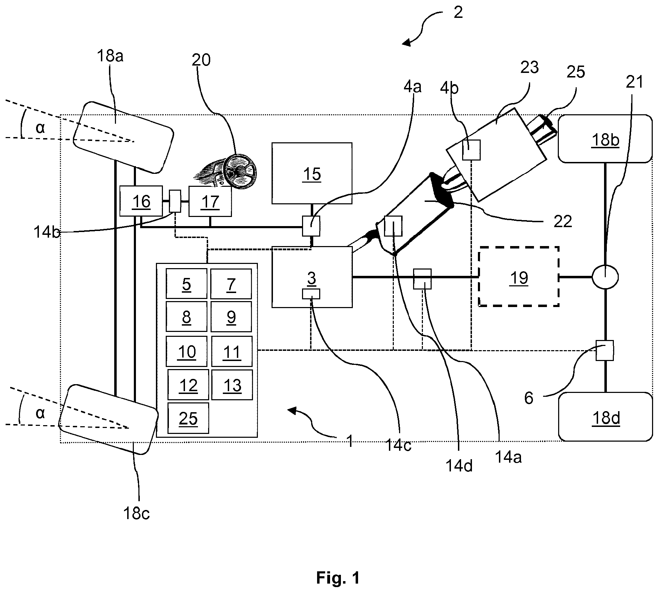

Figur 1 zeigt rein beispielhaft eine Ausführungsform des erfindungsgemäßen Systems in einem Fahrzeug 2 mit einer Antriebseinrichtung 3. Die Antriebseinrichtung 3 ist hierbei insbesondere eine Komponente des Antriebsstrangs, welcher sich von der Antriebseinrichtung 3 über eine Antriebswelle gegebenenfalls zu dem Getriebe 19 und einem Differenzial 21 und dann weiter über Achsen zu Rädern 18b, 18d erstreckt, bei einem Vierradantrieb auch zu weiteren Rädern 18a, 18c. Bei der Antriebseinrichtung 3 handelt es sich bevorzugt um eine Brennkraftmaschine oder um eine Elektromaschine. Die Antriebseinrichtung kann vorzugsweise auch ein Brennstoffzellensystem, insbesondere mit einem Reformer und einer Brennstoffzelle, oder einen Generator aufweisen, mit welchem Energie aus einem Brennstoff, insbesondere Diesel, in elektrische Energie gewandelt werden kann. Die Antriebseinrichtung 3 bezieht die Energie aus einer Energiespeichereinrichtung 15, welche insbesondere durch ein Brennstoffreservoir oder einen elektrischen Energiespeicher, aber auch ein Pressluftreservoir ausgebildet sein kann. Mittels der Antriebseinrichtung 3 wird die in dem Energiespeicher 15 gespeicherte Energie durch Energieumwandlung in mechanische Antriebskraft gewandelt. Im Falle einer Brennkraftmaschine wird die mechanische Arbeit über ein Getriebe 19 und ein Differenzial 21 über Antriebswellen und die Achse auf die Antriebsräder 18b, 18d des Fahrzeugs 2 übertragen. Ein Teil der in dem Energiespeicher 15 gespeicherten Energie wird an Nebenaggregate direkt oder mittels eines Umwandlungsschrittes durch die Antriebseinrichtung 3 als mechanische Arbeit abgeführt. Nebenaggregate sind hierbei insbesondere eine Klimaanlage, ein Ventilator, aber auch Servomotoren, z.B. für die Fensterheber oder eine elektromechanische oder elektrohydraulische Lenkung oder der Brennkraftunterstützer, das heißt jegliche Aggregate, welche Energie verbrauchen, die aber nicht unmittelbar an der Erzeugung des Fahrantriebs des Fahrzeugs 1 beteiligt sind. Abgase bzw. Emissionen, welche beim Betrieb der Antriebseinrichtung 3 gegebenenfalls anfallen, beispielsweise durch das Brennstoffzellensystem oder die Brennkraftmaschine, werden über eine Vorrichtung zur Abgasnachbehandlung 22, z.B. einen Katalysator oder einen Partikelfilter, und durch die Abgasanlage 23 in die Umwelt abgeführt. Vorzugsweise kann das Fahrzeug 2 auch zwei Antriebseinrichtungen 3 aufweisen, insbesondere eine Brennkraftmaschine und eine Elektromaschine, wobei in diesem Fall auch zwei Energiespeicher 15, insbesondere ein Kraftstoffreservoir und ein elektrischer Energiespeicher vorgesehen sind.

Die Erfindung kann zur Analyse jeder anderen Art von Fahrzeug mit vieldimensionalem Antriebssystem zum Einsatz kommen. Insbesondere kann die Erfindung bei Fahrzeugen mit parallelem Hybridantrieb, seriellem Hybridantrieb oder kombiniertem Hybridantrieb verwendet werden.

Die Erfindung hat zum Ziel, den Gesamtenergieverbrauch des Fahrzeugs zu bestimmen, die für den Vortrieb und etwaige zusätzliche Funktionen notwendige Energie zu bestimmen und hieraus eine allgemeingültige Energieeffizienz des Fahrzeugs zu ermitteln.

Im Folgenden wird das hierfür vorgesehene erfindungsgemäße System 1 anhand der Fig. 1 in einem realen Fahrzeug erläutert, wobei die Datensätze der verschiedenen Parameter vorzugsweise durch Messungen bestimmt werden. In weiteren Ausführungsformen, welche nicht dargestellt sind, kann jedoch vorzugsweise auch vorgesehen sein, Teile des Fahrzeugs 2 zu simulieren oder zu emulieren und nur einige Datensätze anhand von Messungen der übrigen realen Systeme und Komponenten des Fahrzeugs bzw. an den Ausgängen der Emulatoren vorzunehmen. Weiter vorzugsweise kann vorgesehen sein, das gesamte Fahrzeug mit allen Komponenten und Systemen zu simulieren.

Als Simulationsmodell für das Fahrzeug kann ein Mehrmassen-Schwinger verwendet werden, dessen Parameter an ein bestimmtes Fahrzeug oder eine Gruppe von Fahrzeugen angepasst werden.

Das System 1 kann mit allen Bestandteilen im Fahrzeug angeordnet sein. Bei Versuchen an einem realen Fahrzeug 2 und bei teilsimulierten Versuchen können die Bestandteile des Systems 1, welche nicht zur Messung am Fahrzeug oder Prüfling auf einem Prüfstand benötigt werden, auch an einem anderen Ort angeordnet sein, beispielsweise in einem Back-End.

Weiterhin wird die Analyse der Energieeffizienz eines Fahrzeugs 2 in der in Fig. 1 dargestellten Ausführungsform anhand der Systeme Lenkung und Antriebsstrang bzw. anhand deren Komponenten elektromechanischer oder hydromechanischer Lenkungsaktuator 16, Lenkungssteuerung 17, bzw. Antriebseinrichtung 3, Energiespeicher 15 und gegebenenfalls Getriebe 19 dargestellt. Es ist für den Fachmann jedoch ersichtlich, dass die Methodik der Erfindung auch auf weitere Systeme, Komponenten und Bauteile des Fahrzeugs 2 übertragen werden kann, wie z.B. das Bremssystem und gegebenenfalls weitere Antriebseinrichtungen etc..

In der in Fig. 1 darstellten Ausführungsform ist die Antriebseinrichtung 3 eine Verbrennungskraftmaschine, welche über eine Abgasnachbehandlung 22 und eine Abgasanlage 24 verfügt. Ein Energiespeicher 15 teilt sich hierbei in den elektrischen Energiespeicher, d.h. die Batterie des Fahrzeugs, und das Brennstoffreservoir auf. Die Energie, welche diesem Energiespeicher entnommen wird, wird vorzugsweise mit wenigstens einem Sensor 4a bestimmt. Weiter vorzugsweise kann mit einem Sensor 4b an einer Abgasanalyseeinrichtung 23 wenigstens eine Emission bestimmt werden. Besonders vorteilhaft ist diese für die von der Verbrennungskraftmaschine 3 verbrauchte Energie repräsentativ. Die Abgasanalyseeinrichtung 23 kann hierbei vor oder nach der Abgasnachbehandlung angeordnet sein.

Das System 1 weist des Weiteren eine zweite Einrichtung 5 auf, welche eingerichtet ist, den momentanen Fahrwiderstand des Fahrzeugs 2 wiederzugeben. Eine solche zweite Einrichtung 5 ist vorzugsweise geeignet, alle Fahrwiderstandskomponenten, welche auf das Fahrzeug 2 einwirken, d.h. den Luftwiderstand, den Rollwiderstand, den Steigungswiderstand und/oder den Beschleunigungswiderstand zu bestimmten. Vorzugsweise wird hierbei auf Fahrzeugdaten, welche beispielsweise vom Hersteller vorliegen, wie das Fahrzeuggewicht und der $C_W$-Wert zurückgegriffen. Andere Parameter, welche sich mit der Temperatur oder dem Fahrzustand ändern, können durch Sensoren bestimmt werden. In den Luftwiderstand gehen hierbei insbesondere der $C_W$-Wert, die Stirnfläche des Fahrzeugs und die Geschwindigkeit ein, in den Rollwiderstand die Elastizität des Rads, der Reifendruck und die Radgeometrie, die Fahrbahnoberflächenbeschaffenheit, welche beispielsweise aus einer Datenbank bestimmt werden kann, sowie der Fahrbahnzustand ein. In den Steigungswiderstand gehen insbesondere das Fahrzeuggewicht und die Steigung ein, wobei die Steigung für eine zurückgelegte $\Delta$-Wegstrecke über einen barometrischen oder GPS-Höhenmesser bestimmt werden kann. Der Beschleunigungswiderstand hängt insbesondere von der Masse und der Beschleunigung des Fahrzeugs 2 ab. Das System 1 weist des Weiteren eine dritte Einrichtung bzw. wenigstens einen Sensor 6 auf, welcher es ermöglicht, wenigstens einen Parameter, der für den Fahrzustand des Fahrzeugs 2 maßgeblich ist, zu bestimmen. Als Parameter kommt wenigstens einer aus der folgenden Gruppe von Parametern in Frage: Motordrehzahl, Drosselklappenstellung oder Gaspedalstellung, Fahrzeuggeschwindigkeit, Fahrzeuglängsbeschleunigung, Saugrohrunterdruck, Kühlmitteltemperatur, Zündzeitpunkt, Einspritzmenge, $\lambda$-Wert, Abgasrückführrate, Abgastemperatur, eingelegter Gang und Gangwechsel. In der Fig. 1 wird beispielsweise über einen Inkrementalgeber 6 die Drehzahl am Antriebsrad 18d bestimmt, wodurch auf die Fahrzeuggeschwindigkeit geschlossen werden kann, mit welcher beispielsweise der Fahrzustand Gleiten bei konstanter Geschwindigkeit, und verschiedene Beschleunigungszustände festgestellt werden kann. Das System 1 weist des Weiteren eine Zuordnungseinrichtung 8 auf, welche insbesondere Teil einer Datenverarbeitungseinrichtung ist, und welche den festgestellten Energieverbrauch des Fahrzeugs und den Fahrwiderstand des Fahrzeugs dem jeweiligen Fahrzustand, welcher zum Zeitpunkt des Messens des jeweiligen Parameterwerte vorlag, zuordnen können. Von dem von dem Fahrzeug 2 zu überwindenden Fahrwiderstand lässt sich vorzugsweise auf jene aufzubringende Energie schließen, welche das Fahrzeug 2 bereitstellen muss, um eine bestimmte, durch den Fahrer vorgegebene Fahrleistung zu erbringen. Durch einen Vergleich dieser durch das Fahrzeug 2 bereitzustellenden Energie mit dem Energieverbrauch des Fahrzeugs 2, welcher vorzugsweise durch die Sensoren 4a, 4b bestimmt wird, lässt sich ein Kennwert für die Energieeffizienz des Fahrzeugs angeben. Dieser wird vorzugsweise durch eine Verarbeitungseinrichtung 9, welche ebenfalls insbesondere Teil einer Datenverarbeitungseinrichtung ist, berechnet.

Vorzugsweise weist das erfindungsgemäße System 1 eine weitere vierte Einrichtung 10 auf, welche einen Sollwert für den wenigstens einen Kennwert erfassen kann. Vorzugsweise ist diese fünfte Einrichtung 10 eine Schnittstelle, mit welcher entsprechende Sollwerte eingelesen werden können, weiter vorzugsweise ist diese fünfte Einrichtung 10 eine Simulationseinrichtung für ein Fahrzeugmodell, welche einen Sollwert für den wenigstens einen Kennwert generiert. Mittels einer zweiten Vergleichseinrichtung 11 kann das System vorzugsweise den Sollwert mit dem Kennwert abgleichen und dann auf einer Anzeige 12 ausgeben.

Das System 1 weist des Weiteren erfindungsgemäß eine Auswahleinrichtung 13 auf, mit welcher ein Benutzer auswählen kann, ob und welches System, welche Komponente oder welches Bauteil beim Ermitteln des wenigstens einen Kennwerts der Energieeffizienz des Fahrzeugs 2 unberücksichtigt bleiben soll. Hierfür wird, mittels eines weiteren Sensors 14a, 14b, 14d, 14d, der Energieverbrauch des Systems, der Komponente oder des Bauteils erfasst und die Verarbeitungseinrichtung 9 bereinigt den Energieverbrauch des Fahrzeugs 2 um den Energieverbrauch des jeweiligen Systems. Alle Sensoren 4a, 4b, 6, 14a, 14b, 14c, 14d des Erfindungsgemäßen Systems 1 stehen vorzugsweise mit einer Datenverarbeitungseinrichtung, welche insbesondere eine erste Vergleichseinrichtung 7, eine Zuordnungseinrichtung 8, eine Verarbeitungseinrichtung 9, eine Datenschnittstelle 10, eine zweite Vergleichseinrichtung 11 und eine Ausgabeeinrichtung 12 aufweist, mittels einer Datenverbindung, insbesondere über die Datenschnittstelle 10, verbunden. Die Datenverbindungen sind in Fig. 1 mit gestrichelten Linien schematisch dargestellt.

Des Weiteren weist das System 1 vorzugsweise einen Datenspeicher 25 auf, in welchem eine Abfolge von Fahrzuständen und dazugehörigen weiteren Daten abgespeichert werden können.

Weiter vorzugsweise kann die Verarbeitungseinrichtung 9, welche insbesondere einen Mikroprozessor mit einem Arbeitsspeicher aufweist und weiter insbesondere ein Rechner ist, beim Ermitteln des Kennwerts die Abfolge der Fahrzustände berücksichtigen und bei der Zuordnung der jeweiligen Datensätze zu dem Fahrzustand die Zuordnung um eine Signallaufzeit oder um eine Laufzeit eines Messmediums bis zu einem Sensor korrigieren.

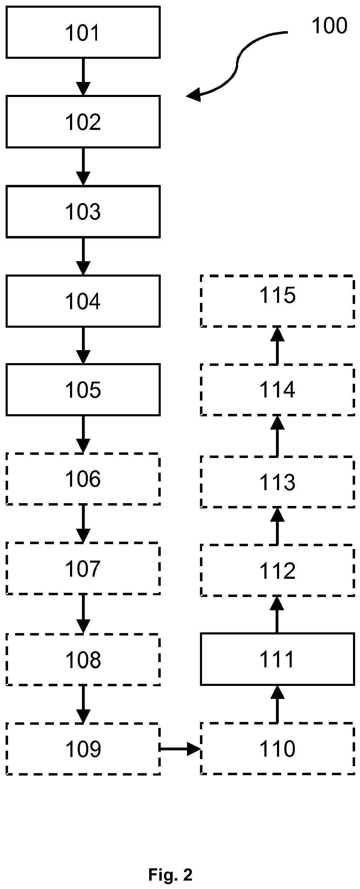

Eine Ausführungsform des erfindungsgemäßen Verfahrens 100 wird im Folgenden anhand der Figuren 2, 3 und 4 erläutert.

Das erfindungsgemäße Verfahren dient dazu, die Energieeffizienz eines Fahrzeugs zu analysieren und insbesondere einen Kennwert und eine Bewertung zu bestimmen, welche allgemeingültig sind und beispielsweise nicht auf einem bestimmten Fahrzyklus beruhen.

Der Ansatz, welcher der Erfindung zugrunde liegt, beruht auf einer Segmentierung komplexer Fahrverläufe in bewertbare Fahrelemente, welche insbesondere Fahrzuständen entsprechen, und in einer Kategorisierung der Systemintegration des gesamten Fahrzeugs 2. Hierfür wird vorzugsweise die Energie, welche aus diversen Energiespeichern 15 des Fahrzeugs 2 zum Betrieb desselbigen abgezogen wird, bestimmt 101. Weiterhin wird der Fahrwiderstand des Fahrzeugs bestimmt, 102, wobei hierbei in der Praxis sowohl auf Messungen als auch auf Parameterwerte aus Datenbanken zurückgegriffen wird, um jene Energie zu bestimmen, die für die Antriebskraft zur Überwindung des Fahrwiderstands von dem Fahrzeug 2 bereitgestellt werden muss.

Weiterhin wird der Fahrzustand des Fahrzeugs bestimmt, 103, 104, 105, wobei Fahrzustände hierbei unter anderem die Zustände Gleiten bei konstanter Geschwindigkeit, Beschleunigung, Kurvenfahrt, Parkfahrt, Geradeausfahrt, Leerlauffahrt, Tip-in, Let-off, Konstantfahrt, Schalten, Schubbetrieb, Stillstand, Bergfahrt, Talfahrt oder auch Kombinationen zumindest zweier dieser Fahrzustände beinhaltet.

Schließlich wird vorzugsweise anhand des zu überwindenden Fahrwiderstands jene Energie bestimmt, die das Fahrzeug zum Vortrieb benötigt. Diese Energie kann vorzugsweise mit der durch den Energiespeicher 15 bereitgestellten Energie verglichen werden, so dass ein Anhaltspunkt für die Energieeffizienz des Fahrzeugs 2 als Kennwert in Abhängigkeit vom Fahrzustand angegeben werden kann. Diese Segmentierung nach Fahrzuständen erlaubt es, die Effizienzbestimmung von der bisherigen Vorgehensweise zu lösen, den Energieverbrauch eines Fahrzeugs über standardisierte Fahrzyklen zu bestimmen. Der errechnete Kennwert gibt für die Gesamtheit des Fahrzeugs 2 einen allgemein gültigen Kennwert an 111.

Es ist für den Fachmann offensichtlich, dass bei dem dargestellten erfindungsgemäßen Verfahren keine zwingende Reihenfolge der einzelnen Arbeitsschritte des Verfahrens besteht. So könnte beispielsweise das Erfassen der Datensätze (101, 102, 103) gleichzeitig oder auch in einer anderen Reihenfolge erfolgen, als dies in Figur 2 dargestellt ist.

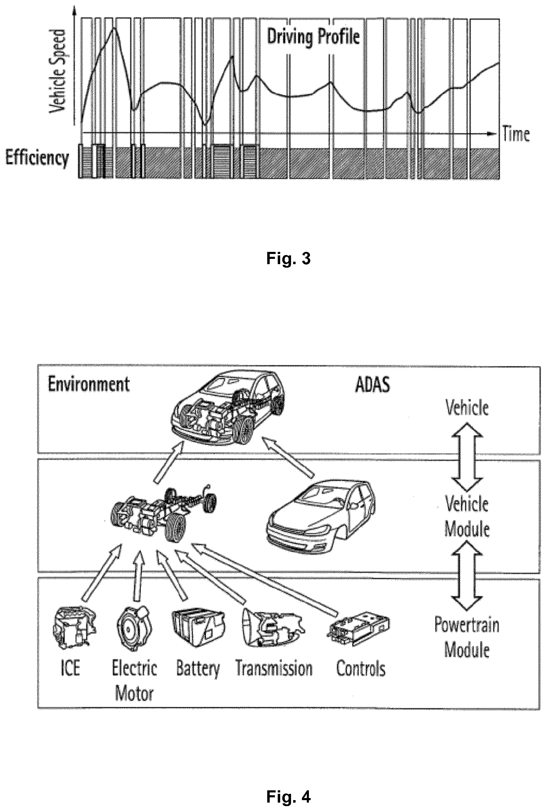

Figur 3 zeigt ein teilweise schematisches Diagramm des Ergebnisses einer erfindungsgemäßen Segmentierung von Real-Drive-Messungen, bei welcher für das Kriterium Energieeffizienz anhand von gefahrenen Fahrelementen, insbesondere Fahrzuständen, eine Analyse vorgenommen wurde.

Der dritte Parameter zur Bestimmung des Fahrzeugzustands wird im oberen Teil des Diagramms dargestellt und ist die Fahrzeuggeschwindigkeit über der Zeit, welche das Fahrprofil des Fahrzeugs 2 repräsentiert. Im unteren Teil des Diagramms sind identifizierte Fahrelemente dargestellt, welche bezüglich der Energieeffizienz des Fahrzeugs 2 einzeln mit Kennwerten beaufschlagt werden bzw. für welche jeweils einzeln eine Bewertung vorgenommen wird.

Die Effizienz des Fahrzeugs wird hierbei nicht von vornherein über den gesamten Fahrverlauf gemittelt, wie dies bei Vorgehensweisen aus dem Stand der Technik üblich ist. Bei der Erfindung werden einzelne Fahrzustände identifiziert und diesen Fahrzuständen der jeweilige Fahrwiderstand des Fahrzeugs und die Energie, welche in diesem Fahrzustand verbraucht wird, zugeordnet. Auf der Grundlage dieser Zuordnung wird ein Kennwert errechnet, welcher die Energieeffizienz des Fahrzeugs in dem untersuchten Fahrzustand wiedergibt.

Das Verfahren 100 kann im On-line Betrieb mit sofortiger Ausgabe des Kennwerts eingesetzt werden. Dies ist beispielsweise dann von Vorteil, wenn das System 1 vollständig im Fahrzeug 2 installiert ist und ein Testfahrer während einer Testfahrt Informationen über die Energieeffizienz oder das Fahrzeugbetriebsverhalten abrufen will. Das Verfahren 100 kann jedoch auch im Off-line Betrieb eingesetzt werden, wo während einer Testfahrt aufgenommene Werte analysiert werden. Des Weiteren kann das Verfahren 100 in Fahrzeugen von Nutzern ständig mitlaufen und periodisch oder in Echtzeit Daten zur anonymen Auswertung an ein Back-End bzw. einen Zentralrechner übermitteln.

Durch Vorgeben eines Sollwerts, z.B. anhand von Berechnungen, insbesondere Fahrzeugsimulationen, oder anhand von Referenzfahrzeugen können vorzugsweise Sollwerte oder Sollwertfunktionen vorgegeben werden 113, mit welchen der ermittelte Kennwert abgeglichen werden kann 114. Abschließend wird hieraus vorzugsweise eine allgemeingültige Bewertung der Energieeffizienz auf der Grundlage des Abgleichens 114 ausgegeben 115.

Besonders bevorzugt ist der Zusammenhang zwischen Kennwert und Sollwert in einer mathematischen Funktion abgebildet, so dass bei entsprechender Eingabe der Parameter in die Funktion die Bewertung der Energieeffizienz als Ergebnis einer Berechnung ausgegeben wird.

Eine einfache Funktion zur Berechnung eines Kennwerts KW kann wie folgt dargestellt werden, wobei der Wert der Faktoren $c_i$ von dem jeweiligen festgestellten Fahrzustand abhängt:

$$KW = c_1 \cdot Parameter_1 + c_2 \cdot Parameter_2$$

Eine Berechnung einer Bewertung kann entsprechend erfolgen, wobei in diesem Fall die Faktoren $c_i$ des Weiteren von einer entsprechenden Sollwertfunktion, welche als Bewertungsreferenz dient abhängen.

Sowohl der allgemeingültige Kennwert wie auch die allgemeingültige Bewertung der Effizienz des Fahrzeugs 2 sind geeignete Größen, um bisherige Verbrauchsnormen, welche anhand von festgelegten Fahrzyklen wie dem NEFS (Neuer Europäischer Verbrauchszyklus) oder dem WLTP (Worldwide Harmonized Light Vehicle Test Procedure) ermittelt wurden, zu ersetzen.

Vorzugsweise kann in den Kennwert oder die Bewertung auch eine Topographie einer Umgebung des Fahrzeugs 2 eingehen. Hierdurch kann beispielsweise berücksichtigt werden, ob ein Fahrzeug 2 in seiner Betriebsstrategie die Geländeform z.B. der vor dem Fahrzeug liegenden Straße berücksichtigt, um eine möglichst günstige Effizienz zu erreichen. So könnte die Betriebsstrategie eines Fahrzeugs 2 z.B. vorsehen, dass ein elektrischer oder ein Pressluft-Energiespeicher 15 auf einer abschüssigen Strecke voll aufgeladen wird, um diese Energie auf einer darauffolgenden Bergfahrtstrecke wieder aus dem jeweiligen Energiespeicher 15 freigeben zu können. Zur Ermittlung der Topographie kann von Fahrzeugseite ein Laser- oder Lidar-System eingesetzt werden, die Topographie kann aber auch mittels des GPS-Systems und dem Fahrzeugfahrer bzw. dem Fahrzeug 2 vorliegenden Kartenmaterials ermittelt werden.

Weiter vorzugsweise findet, wie eingangs erwähnt, auch eine Kategorisierung der Systemintegration des Gesamtfahrzeugs Anwendung. Hierdurch wird die Energieeffizienz nicht nur unabhängig von einem bestimmten Fahrzyklus gemacht, sondern die Energieeffizienz kann allein für einzelne Systeme oder Funktionen des Fahrzeugs 2 bestimmt werden. Dies wird vorzugsweise erreicht, indem ein Energieverbrauch wenigstens einer Vorrichtung A, insbesondere eines Nebenaggregats 16, der wenigstens einen Antriebseinrichtung 3, der Lenkung, des Antriebsstrangs oder jedes anderen Systems, Komponente oder Bauteils des Fahrzeugs, bestimmt wird.

Eine solche Kategorisierung ist beispielhaft in Figur 4 dargestellt. Das Fahrzeug 2 kann hierbei in Module wie beispielsweise Antriebsstrang und Karosserie untergliedert werden. Die einzelnen Module lassen sich wiederum in Komponenten und Bauteile aufgliedern. Komponenten des Antriebsstrangs sind hierbei wie dargestellt insbesondere eine Verbrennungskraftmaschine (ICE), eine Elektromaschine, ein Getriebe und deren elektrische Steuerungen. Eine Vorrichtung A kann durch ein Modul, eine Komponente oder auch durch ein Bauteil gebildet werden.

Legt das System 1 oder ein Benutzer fest 106, welche Vorrichtung A beim Ermitteln des wenigstens einen Kennwerts oder der Bewertung 111 außer Acht gelassen werden soll, so kann dessen Energieverbrauch bestimmt werden und von dem Gesamtenergieverbrauch als nicht zu berücksichtigende Komponente abgezogen werden.

Auf diese Weise können selektiv einzelne Vorrichtungen A aus der Ermittlung der Energieeffizienz für das Fahrzeug 2 ausgeklammert werden, wobei hierbei insbesondere zwischen Vorrichtungen A, welche für den Fahrbetrieb des Fahrzeugs notwendig sind und Vorrichtungen A, welche für den Fahrbetrieb unabhängige Funktionen erfüllen, unterschieden werden kann. Erstere Vorrichtungen A sind z.B. das Lenksystem, das Bremssystem, aber auch die Kühlpumpe des Motors. Letztere Vorrichtungen A sind beispielsweise die Klimatisierung oder auch das Infotainment.

Um den Energieverbrauch einer Vorrichtung A zu bestimmen, welche teilweise Energie verbraucht und die Energie teilweise weitergibt, wie z.B. eine Brennkraftmaschine oder auch eine Elektromaschine oder auch das Getriebe, kann die Notwendigkeit bestehen, zur Bestimmung des Energieverbrauchs sowohl jene Energie zu bestimmen, welche der jeweiligen Vorrichtung A bereitgestellt wird, als auch jene Energie zu bestimmen, welche die Vorrichtung A wieder abgibt, d.h. bezüglich der Vorrichtung A muss eine Energiebilanz aufgestellt werden. Bezüglich einer Antriebseinrichtung 3 des Fahrzeugs 2 ist eine solche hineingesteckte Energie E(in) über die zugeführte Brennstoffmenge oder auch über die Kohlenstoffemission der Brennkraftmaschine, bei einer Elektromaschine über den Verbrauch an elektrischer Energie, definiert. In Bezug auf die Brennkraftmaschine kommt in Bezug auf die hineingesteckte Energie E(in) eventuell über zusätzliche elektrische Motoren, sogenannte Nebenaggregate, zugeführte Energie hinzu.

Die von der Antriebseinrichtung geleistete Energie E(out), welche für den Vortrieb und für weitere Nebenaggregate im Fahrzeug bereitgestellt wird, kann an der Welle über Drehzahl und Drehmoment abgegriffen werden. Soll nur die Effizienz des Verbrennungsprozesses an sich bestimmt werden, so muss auch berücksichtigt werden, dass die Energie, welche der Brennkraftmaschine über elektrische Motoren über Nebenaggregate bereitgestellt wird, am Ende gegebenenfalls über den Umweg des Energiespeichers 15, wieder aus der durch die Verbrennung gewonnene Energie abgezweigt wird.

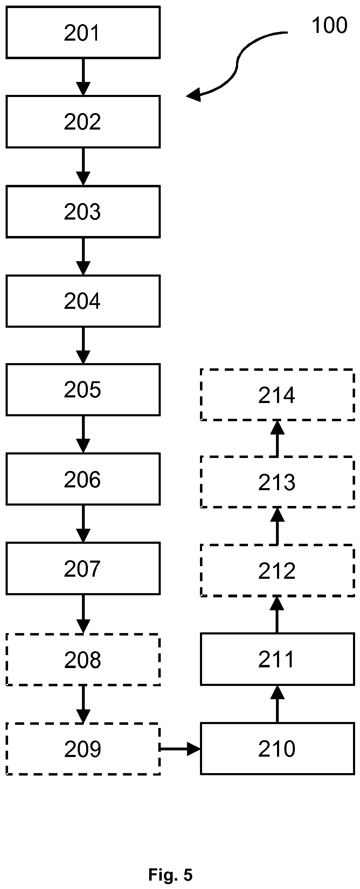

Figur 5 betrifft eine Darstellung der Arbeitsschritte eines Verfahrens zur Analyse eines Betriebsverhaltens eines Fahrzeugs 2. Das dargestellte Verfahren 200 entspricht im Wesentlichen dem Verfahren zur Analyse einer Energieeffizienz eines Fahrzeugs 2 nach Figur 2, wobei die Parameter des ersten Datensatzes nicht nur den Energieverbrauch, sondern auch eine Emission, eine Fahrbarkeit und ein NVH-Komfort des Fahrzeugs charakterisieren. Aus den Informationen des ersten Datensatzes, des zweiten Datensatzes und des dritten Datensatzes werden im Arbeitsschritt 206 jeweils ein Energieeffizienzwert, ein Emissionswert, ein Fahrbarkeitswert und ein NVH-Komfortwert für den jeweiligen Fahrzeugzustand ermittelt. In einem weiteren Arbeitsschritt 207 wird eine Relevanz des jeweiligen Fahrzustands für jeweils das Kriterium Energieeffizienz, Emission, Fahrbarkeit und NVH-Komfort bestimmt.

Die Bestimmung der Relevanz von einzelnen Fahrzuständen durch ein Auffinden von das jeweilige Kriterium beeinflussenden Ereignissen innerhalb der Fahrzustände, wie zum Beispiel eines starken Anstiegs der Emission oder ein Abfall der Emission für das Kriterium Emission ermöglicht es, Zielkonflikte bei der Optimierung bezüglich der verschiedenen für die Benutzerwahrnehmung maßgeblichen Kriterien zu identifizieren. In die einzelnen Werte für Energieeffizienz, Emission, Fahrbarkeit und NVH-Komfort werden gewichtet 210, wobei hierbei die Relevanz eines Fahrzustands bzw. Fahrelements für die jeweiligen Kriterien berücksichtigt wird. Auf der Grundlage dieser gewichteten Werte für die Kriterien und des jeweils vorliegenden Fahrzustands wird ein Gesamtkennwert ermittelt 211, auf dessen Grundlage mittels einer Optimierung Zielkonflikte zwischen den einzelnen Kriterien gelöst werden können.

Die Arbeitsschritte der vorteilhaften Ausführungsform, welche im Wesentlichen dem Verfahren zur Analyse der Energieeffizienz eines Fahrzeugs entsprechend, sind in Figur 5 ebenfalls mit gestrichelten Blöcken dargestellt.

Es ist für den Fachmann offensichtlich, dass bei dem dargestellten erfindungsgemäßen Verfahren keine zwingende Reihenfolge der einzelnen Arbeitsschritte des Verfahrens besteht. So könnte beispielsweise das Erfassen der Datensätze (201, 202, 203) gleichzeitig oder auch in einer anderen Reihenfolge erfolgen, als dies in Figur 5 dargestellt ist.

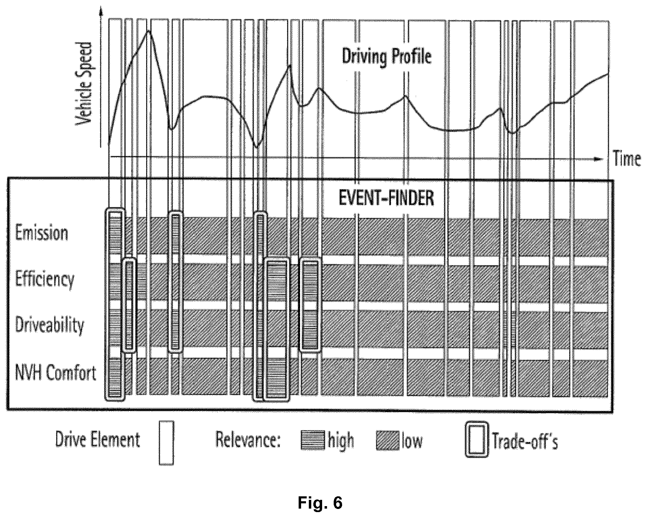

Figur 6 zeigt ein teilweise schematisches Diagramm des Ergebnisses einer Analyse von Real-Drive Messungen, bei welcher für die Kriterien Emission, Energieeffizienz, Fahrbarkeit und NVH-Komfort anhand von Parametern, die diese Kriterien charakterisieren und anhand von gefahrenen Fahrelementen, insbesondere Fahrzuständen, jeweils relevante Ereignisse identifiziert wurden.

Im oberen Diagrammteil ist wiederum ein Fahrprofil eines Fahrzeugs 2 anhand des dritten Parameters Geschwindigkeit über der verstrichenen Zeit gezeigt. Im unteren Bereich sind für die Kriterien Emission, Effizienz, Fahrbarkeit und NVH-Komfort als helle Bereiche jeweils jene Fahrelemente bzw. Fahrzustände gekennzeichnet, die für das jeweilige Kriterium als relevant identifiziert wurden.

Betrachtet man die Ergebnisse, so wird ersichtlich, dass es zwar einzelne Fahrelemente gibt, die nur hinsichtlich einer Optimierungsgröße relevant für die Gesamtbewertung sind. Im Regelfall sind jedoch für Emission, Effizienz, Fahrbarkeit und NVH-Komfort die gleichen Fahrelemente maßgeblich. Durch diese gegenseitigen Abhängigkeiten müssen Zielkonflikte innerhalb der Bewertung gelöst werden. Die gezeigten Fahrelemente entsprechen dabei vorzugsweise einem Fahrzustand oder einer Abfolge an gleichen oder unterschiedlichen Fahrzuständen.

Die Identifikation von ergebnisrelevanten Fahrelementen erfordert die Vorgabe entsprechender Sollwerte für diese Fahrelemente und den Vergleich mit den jeweils gemessenen Istwerten. Dabei werden die Sollwerte für die einzelnen Kriterien auf unterschiedliche Weise generiert:

Energieeffizienz und Emission: Die Sollwertberechnung erfolgt vorzugsweise wie oben für die Effizienz dargestellt. Die Sollwerte bezüglich dieser Kriterien beruhen vorzugsweise allein auf einer Auswertung physikalischer Parameter.

Fahrbarkeit und NVH-Komfort: Hier erfolgt die Sollwertvorgabe auf Basis von objektiviertem subjektiven Fahrempfinden und der Vorgabe einer gewünschten Fahrzeugcharakteristik. Die Objektivierung des subjektiven Fahrempfindens erfolgt vorzugsweise anhand diskreter mathematischer Zusammenhänge, im einfachsten Fall durch einen Vergleich mit einem Referenzfahrzeug. Vielfach muss aber das menschliche Empfinden über neuronale Netzwerke mit physikalisch messbaren Größen korreliert werden.

Durch die vorzugsweise Identifizierung von relevanten Ereignissen, welche die Bewertung mehrerer Kriterien betreffen, können Engpässe bei der Optimierung eines Fahrzeugs zuverlässig identifiziert werden.

Für die Bewertung des Entwicklungsstandes eines Fahrzeugs ist jedoch vorzugsweise nicht nur der Vergleich mit üblicherweise in der Konzeptphase einer Gesamtentwicklung generierten idealen Kennwerten und Verläufen von Interesse, sondern auch die Positionierung in einem spezifischen Benchmark-Streuband. Dies ist insbesondere für Fahrzeuganalysen von Bedeutung, bei denen die für eine Sollwertberechnung erforderlichen Basisdaten nicht vollständig vorliegen. Zur Erstellung einer solchen Datenbank können Untersuchungen der jeweils aktuellsten Fahrzeuge durchgeführt werden.

Die eigentliche Optimierung erfolgt vorzugsweise durch Übertragung der ergebnisrelevanten Einzelereignisse in die jeweils bestgeeignetste Entwicklungsumgebung. Für Einzelereignisse, die primär nur ein Kriterium betreffen, erfolgt die Optimierung vielfach direkt im Fahrzeug in unmittelbarer Interaktion mit einer automatisierten On-Line Bewertung (z.B. Kompensation bestimmter Fahrbarkeitsfehler). Für diejenigen Einzelereignisse, in denen ausgeprägte Zielkonflikt-Beziehungen zwischen den unterschiedlichen Bewertungsgrößen (z.B. Effizienz, Emissionen, Fahrbarkeit, NVH-Komfort etc.) bestehen, ist vorzugsweise das Abbilden der relevanten Einzelereignisse am XiL- (engl: Hardware in the Loop), Motor- und / oder Antriebsstrang-Prüfstand sinnvoll. Hier erlaubt das reproduzierbare Arbeiten nach der erfindungsgemäßen Lehre eine effiziente Entwicklung im einzelnen Fahrelement, wobei nicht nur eine isolierte Optimierung einer Einzelgröße erfolgt, sondern die Zielkonflikte der einzelnen Kriterien optimiert werden können. Durch ein simultan laufendes Gesamtfahrzeugmodell können zudem auch die Auswirkungen auf das Gesamtsystem "Fahrzeug" unmittelbar beurteilt werden.

Ein Abgleich mit einer Real-Drive-Fahrelemente-Bibliothek (Benchmark Daten) ermöglicht vorzugsweise eine detaillierte Einordnung im Konkurrenzumfeld. Diese vorzugsweise unmittelbare Bewertbarkeit ermöglicht ein rasches und treffsicheres Reagieren und damit eine höhere Agilität im Prozess.

Die Fahrelement-Betrachtung auf Basis der Ereignisse erlaubt sowohl eine effiziente Kalibrierfähigkeit als auch eine treffsichere, virtuelle Identifikation von optimal angepassten Antriebsarchitekturen. Dies ermöglicht auch die Erstellung einer verfeinerten Entwicklungslandkarte, in der die relevanten Entwicklungsaufgaben (sowohl technische als auch subjektive Größen) markiert werden.

Vorzugsweise ist eine umfassende Real-Drive-Fahrelementdatenbank mit einer entsprechenden Statistik über ergebnisrelevante Einzelereignisse, sowie eine segmentierte Betrachtung relevanter Fahrverläufe vorgesehen, durch welche nicht nur im Kalibrierprozess, sondern auch in der frühen Konzeptphase einer Antriebsstrang- bzw. Fahrzeugentwicklung wichtige ergebnisrelevante Aufgabenstellungen treffsicher adressieren lassen.

Fahrzustände, welche für die Energieeffizienz oder für weitere Kriterien kritisch sind werden vorzugsweise anhand der für diesen Fahrzustand physikalischen Parameter abgebildet. Anhand dieser Abbildung können Fahrzustände, welche beispielsweise im realen Fahrbetrieb bei einen realen Fahrzeug ermittelt wurden, am Fahrzeugrollenprüfstand, am Antriebsstrangrückstand, am dynamischen Rückstand oder in einer XiL-Simulationsumgebung rekonstruiert werden. Dies ermöglicht es, kritische Fahrzustände, zum Beispiel zum Zwecke einer Lösung von Zielkonflikten zwischen verschiedenen Kriterien, detailliert am Prüfstand zu untersuchen.

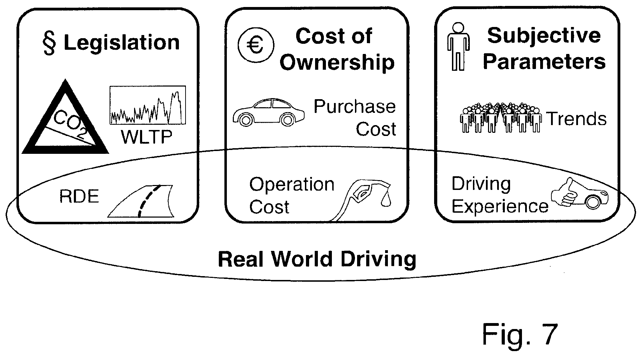

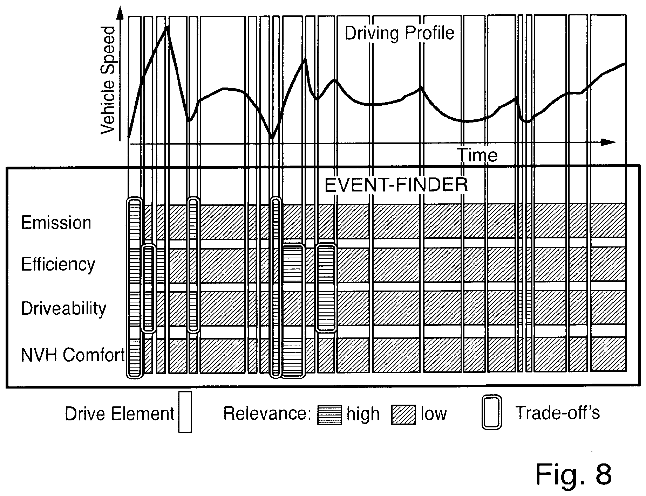

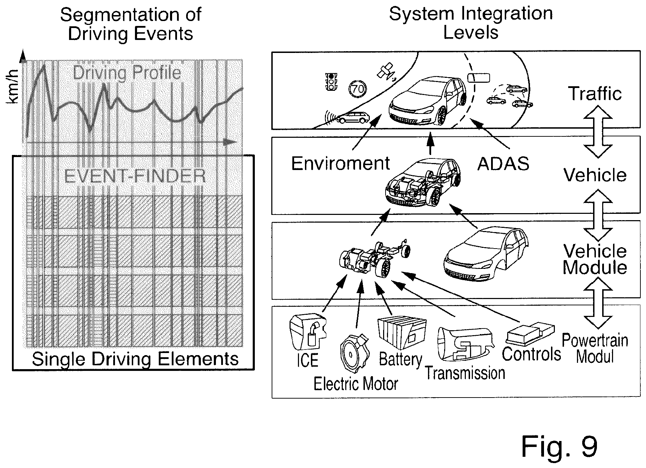

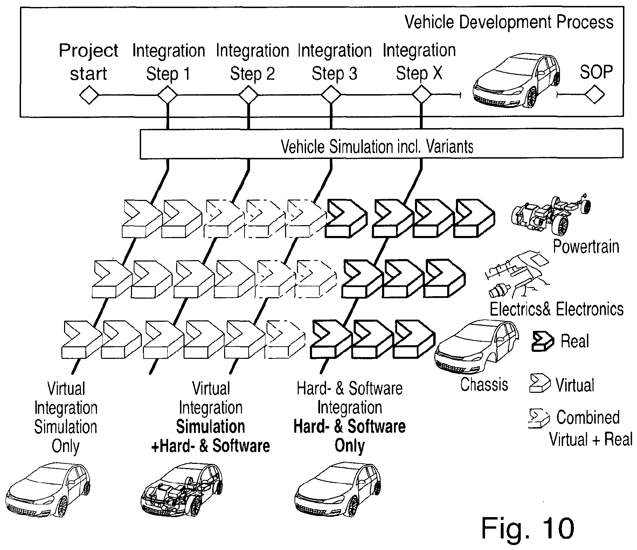

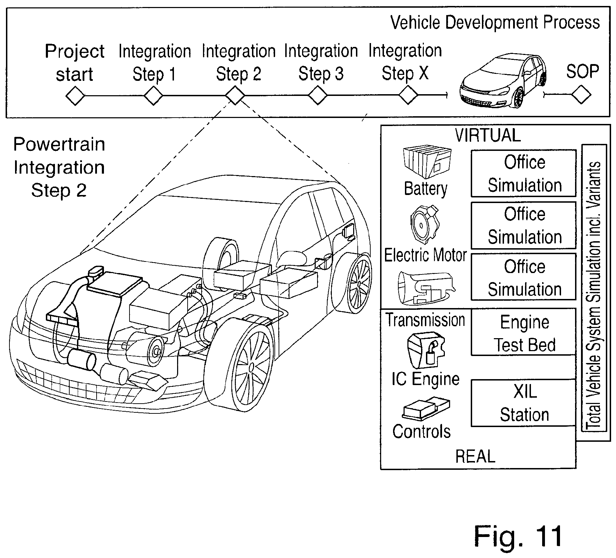

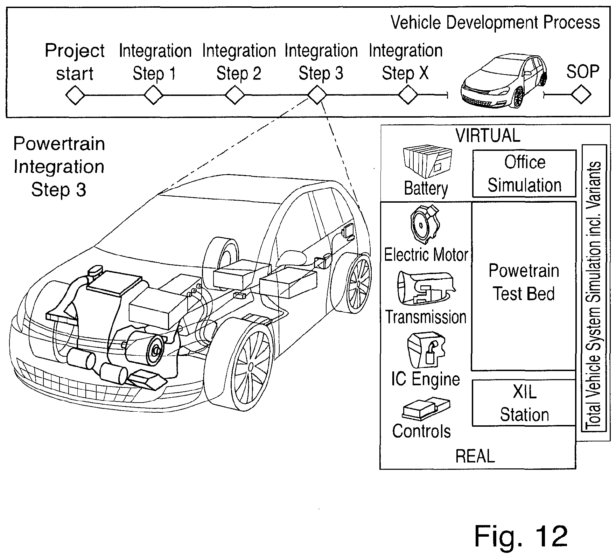

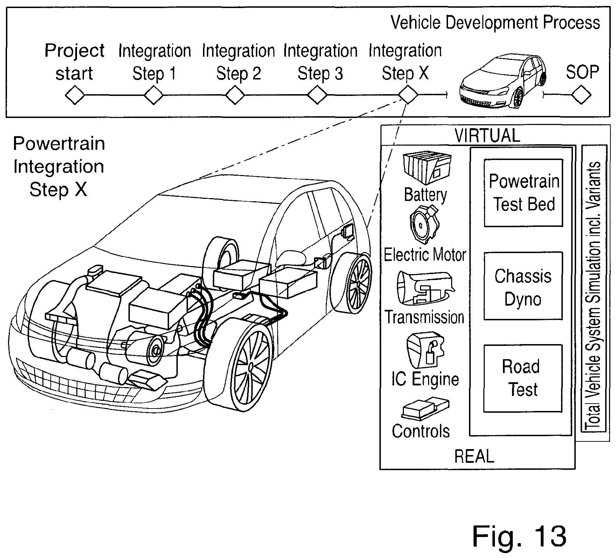

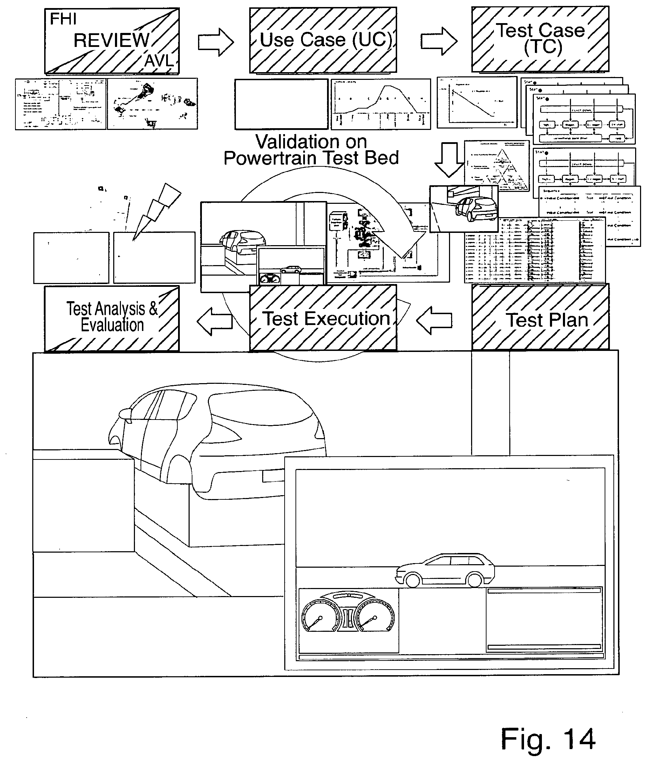

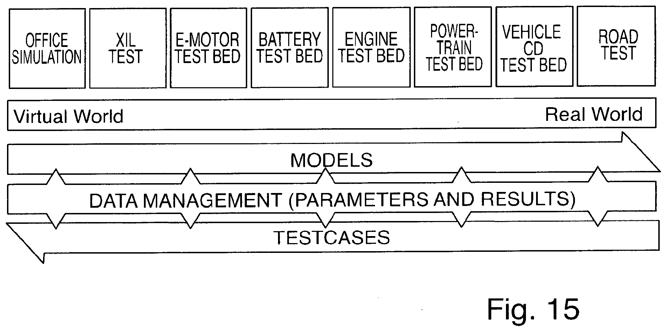

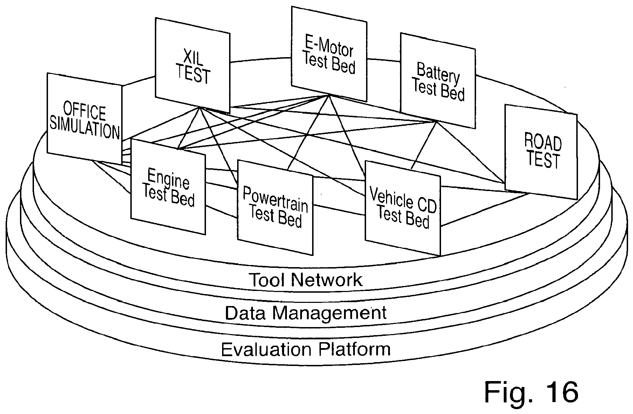

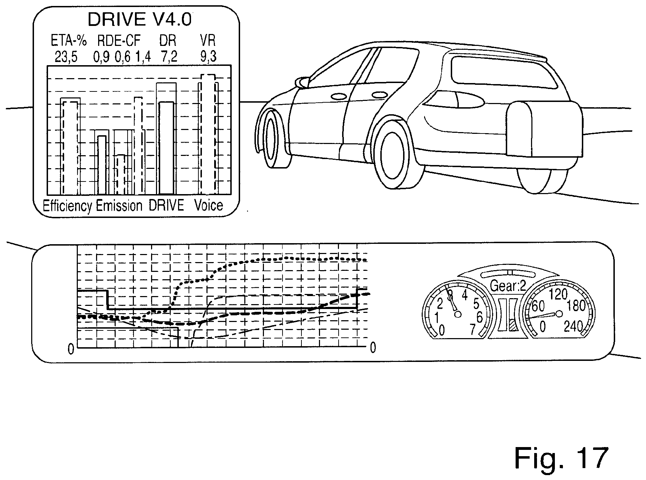

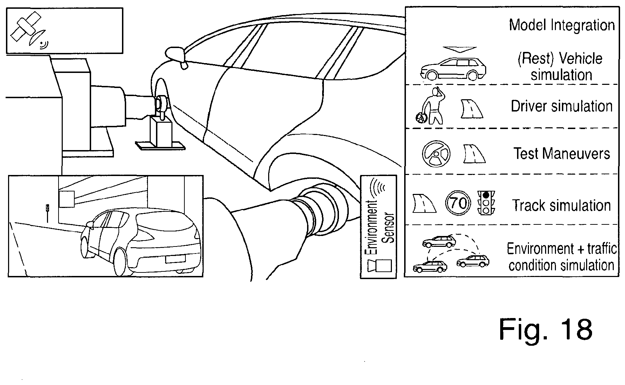

Weitere Aspekte der Erfindung sind in den folgenden Ausführungsbeispielen in Bezug auf die Figuren 7 bis 18 beschrieben.

Verschärfte gesetzliche Anforderungen (z.B.: CO2, WLTP, RDE) und gesteigerte Kundenbedürfnisse ("positives Fahrerlebnis") sowie die Einbeziehung aller relevanten Umgebungsinformationen ("Connected Powertrain") resultieren in drastisch erhöhter Komplexität und zunehmender Variantenvielfalt zukünftiger Antriebssysteme. Dabei werden die Entwicklungsherausforderungen noch durch verkürzte Modellwechselzyklen und die zusätzliche verstärkte Einbeziehung des realen Kundenfahrbetriebs ("Real Word Driving) verschärft.

Eine effiziente Entwicklung unter erweiterten "Real Word" Randbedingungen, wie z.B. die Ausdehnung der bisherigen synthetischen Testzyklen auf den Realbetrieb mit zufälligen Fahrzyklen, erfordert einerseits die Objektivierung subjektiver Größen (z.B.: Fahrerlebnis) aber auch eine reproduzierbare Bestimmung komplexer, von Stochastik beeinflusster Kennwerte (z.B. Real Drive Emissionen). Dafür werden zufällige Fahrverläufe in kleine, reproduzier- und bewertbare Fahrelemente zerlegt und die relevanten Trade-Off Beziehungen (z.B.□ Fahrbarkeit, Geräuschempfinden, Effizienz, Emission) im Einzelelement optimiert. Ein intelligenter "Eventfinder" erlaubt es dabei, sich gezielt auf diejenigen Fahrelemente zu konzentrieren, die einen wesentlichen Einfluss auf das Gesamtergebnis haben. Zusätzlich bildet eine daraus generierte "Real Drive Manöver-Bibliothek" in Verbindung mit einem übergreifenden Gesamtfahrzeugmodelleine entscheidende Grundlage dafür, einzelne Entwicklungsaufgaben in die jeweils bestgeeignetste Entwicklungsumgebungen und damit verstärkt in die virtuelle Welt zu verlagern.

Eine Verkürzung des übergeordneten Gesamtfahrzeug-Entwicklungsprozesses erfordert jedoch nicht nur verstärktes Frontloading bei der Entwicklung der einzelnen Teilsysteme, sondern auch ein verstärktes übergreifendes Arbeiten in gemischt virtuell-realen Entwicklungsumgebungen. Der Schritt vom digitalen Mockup (DMU) zum funktionalen Mockup (FMU) und die konsistente Bewertung aus der Gesamtfahrzeugsicht tragen wesentlich dazu bei, die Komplexität zukünftiger Antriebe innerhalb kurzer Entwicklungszeiten überhaupt beherrschbar zu machen. Mit der integrierten offenen Entwicklungsplattform IOPD und der erweiterten Bewertungsplattform AVL-DRIVE V4.0 hat hier AVL wesentliche Werkzeug- und Methodikbausteine geschaffen.

1. Herausforderungen für die Antriebsentwicklung

Die wesentlichsten Impulse für die Weiterentwicklung von PKW-Antriebssystemen werden mittel- und längerfristig sowohl von der Gesetzgebung als auch vom Endkunden kommen.

Die signifikante Reduktion der CO2-Flottenemission mit drohenden Strafzahlungen, verschärften Testprozeduren (WLTP) und die zusätzliche Limitierung der Schadstoffemissionen im realen Kundenfahrbetrieb (Real Driving Emission) stellen signifikante Verschärfungen gesetzlicher Randbedingungen dar und verursachen wesentliche Mehraufwände bei der Fahrzeugentwicklung. Auf der Kundenseite gewinnt einerseits das Thema "Total Cost of Ownership" an Bedeutung, andererseits werden rein subjektive Kriterien wie gesellschaftliche Trends, soziale Akzeptanz, etc. aber insbesondere das "positive Fahrerlebnis" verstärkt zu den entscheidenden Kaufargumenten. Somit erweitert sich der Fokus von der Darstellung rein technischer Zielwerte wie Leistung und Kraftstoffverbrauch um die Erfüllung eines positiven subjektiven Kundenerlebnis - das "Erlebnis Auto" geht dabei weit über das Verhalten des Antriebsstrangs hinaus. Die Kunden nehmen dabei die Eigenschaften und Werte des Fahrzeuges, wie Styling, Ergonomie, Bedienbarkeit, Infotainment und Assistenzsysteme, Sicherheitsgefühl, Fahrkomfort, Agilität, und Fahrbarkeit im ganzheitlichen Kontext und als Gesamtfahrzeugverhalten wahr.

Damit gewinnt der reale Fahrbetrieb für die Entwicklung neuer Fahrzeugsysteme entscheidend an Bedeutung: nicht nur Real World Emission und Verbrauch, sondern auch das positive Fahrerlebnis des Kunden wird zur entscheidenden Zielgröße. Allerdings unterliegen nicht nur subjektive Bewertungskriterien raschen Schwankungen. Neue Trends, individuelle Ansprüche und neue Technologien ergeben eine signifikante Unvorhersehbarkeit eines hochdynamischen Marktes [1]. Die Antwort auf diese Situation kann nur eine extrem rasche Reaktionsfähigkeit bei der Produktkonfiguration und -entwicklung sein. Die im IT Bereich bereits heute üblichen kurzen Modellzyklen in der Zeitskala von Monaten nehmen über das Infotainment und die Assistenzsysteme verstärkten Einfluss auf die Automobilentwicklung. Damit müssen wir uns auch im automobilen Bereich auf wesentlich verkürzte Modelwechselzyklen und / oder upgrade-bare Lösungen einstellen sowie agilere Entwicklungsmethoden einführen. Ein sinnvoller technischer Lösungsansatz liegt hier sicherlich in erweiterten Baukastensystemen, die mittels Software in stark diversifizierte Lösungen ermöglichen. Agile, adaptive und testbasierte Methoden der modelbasierten Entwicklung werden hierbei unterstützen.

Hinsichtlich der rein technischen Aspekte stellt sicherlich die $CO_2$ Gesetzgebung den wesentlichsten Technologietreiber dar. Die zukünftigen $CO_2$- bzw. Verbrauchs-Flottengrenzwerte konvergieren weltweit auf einem sich ständig reduzierendem Niveau. Dies erfordert einerseits komplexe Antriebssysteme mit hochflexiblen Komponenten, bedingt aber andererseits auch eine verstärkt individualisierte Anpassung an unterschiedlichste Randbedingungen und resultiert in einer vieldimensionalen Diversifizierung der Antriebssysteme (verschiedene Energieträger, unterschiedlicher Elektrifizierungsgrad, Variantenvielfalt, etc.).

Zukünftig erlaubt zudem die Vernetzung des Antriebsstranges mit der gesamten relevanten Fahrzeugumgebung ("Connected Powertrain") eine optimale Anpassung der Betriebsstrategien an die realen Verkehrssituationen und Umweltbedingungen. Die Fülle der Informationen von Fahrzeug-Infotainment, Assistenzsystemen bis zur C2X-Kommunikation erlaubt es, viele Szenarien schon vorab zu berechnen und so den Optimierungs-Horizont massiv zu erweitern. Damit können die vielfältigen Freiheitsgrade zukünftiger Antriebssysteme in wesentlich höherem Ausmaß zur Reduzierung des Energieverbrauches genutzt werden. Dies bedingt jedoch hochkomplexe Betriebsstrategien mit extrem gesteigerten Entwicklungs-, Kalibrier- und vor allem Validierungsaufwand.

Neben der sicheren Beherrschung dieser zunehmenden Komplexität der Antriebssysteme ergibt sich ein weiterer, ganz maßgeblicher Einfluss auf die Entwicklungsmethodik durch die zukünftige RDE-Gesetzgebung. Diese ist charakterisiert durch die Erweiterung des synthetischen Testzyklus um den zufälligen Realbetrieb mit einer unüberschaubaren Vielzahl unterschiedlicher Fahrzustände und Randbedingungen.

Aus Kundensicht umfasst jedoch Real World Driving wesentlich mehr als nur RDE:

- Positives Fahrerlebnis - Driveability / Komfort / Agilität / Bedienbarkeit
- Absolute funktionale Sicherheit
- Höchste Effizienz bzw. minimaler Verbrauch
- Vertrauen in Fahrerassistenzsysteme
- Hohe Zuverlässigkeit / Dauerhaltbarkeit

2. Fahrelementorientierter Ansatz im Entwicklungsprozess

Der Übergang von der exakten Reproduzierbarkeit der Tests mit klar definierten Zyklen und festgelegten Bewertungsgrößen auf Beurteilungen von realen Fahrten mit statistischer Zufälligkeit sowie der Berücksichtigung des subjektiv empfundenen Fahrerlebnisses stellt einen wesentlichen Umbruch dar und erfordert sowohl neue Entwicklungsansätze als auch neue Entwicklungsumgebungen. Wesentliche Grunderfordernisse sind dabei:

- Die Objektivierung subjektiver Größen (z.B.: Fahrerlebnis): Hinsichtlich der Objektivierung des subjektiv empfundenen Geräusches und der Fahrbarkeit hat AVL jahrzehntelange Praxiserfahrungen gesammelt und entsprechende Entwicklungswerkzeuge geschaffen - so ist z.B. AVL-DRIVE [2] auf dem besten Wege, ein breit akzeptierten Werkzeug für Fahrbarkeitsbewertung zu werden.

- Zuverlässig reproduzierbare Bestimmung komplexer, von Zufälligkeiten beeinflusster Kennwerte (z.B. Real Drive Emission): Ein sehr praktikabler Ansatz ist es, solche komplexe Fahrverläufe in reproduzierbare und bewertbare Segmente - die Fahrelemente - zu zerlegen, diese zu kategorisieren und den Einfluss auf den integralen Kennwert statistisch zu berücksichtigen. Dies kann in Analogie zur Diskretisierung anderer Aufgabenstellungen wie z.B. der Betriebsfestigkeitsanalyse oder Prozesssimulation gesehen werden. Die Größe dieser Elemente wird dabei durch Forderung nach reproduzierbarer Bewertbarkeit bestimmt. Hier wird das subjektive Empfinden des Menschen zur Führungsgröße auch für andere Bewertungsparameter wie Verbrauch, Emissionen, etc.

Den wirklich entscheidenden Schritt stellt aber die Fähigkeit dar, aus der Vielzahl der Einzelelemente diejenigen zu identifizieren, die eine signifikante Relevanz für das Gesamtergebnis haben.

Eine solche Methode wird bei AVL seit Jahren im Bereich der Fahrbarkeitsentwicklung erfolgreich eingesetzt (AVL-DRIVE). Dabei wird ein willkürlicher Real World Fahrverlauf in definierte Einzelelemente zerlegt, diese dann rund 100 einzelnen Kategorien zugeordnet, entsprechend rund 400 spezifischen Beurteilungskriterien getrennt evaluiert und statistisch bewertet.

Mit vergleichbar geringen Anpassungen kann diese Methode der Nutzung kategorisierbarer Fahrsegmente nicht nur zur Bewertung der Fahrbarkeit und des Geräuschkomforts unter realen Bedingungen, sondern auch der Emissionen, der Effizienz und im Weiteren auch für querdynamische Größen bis hin zur Beurteilung von Fahrerassistenzsystemen [3] angewandt werden.

Betrachtet man die Ergebnisse von Real-World Messungen, so wird ersichtlich dass es zwar einzelne Fahrelemente gibt, die nur hinsichtlich einer Optimierungsgröße relevant für die Gesamtbewertung sind. Im Regelfall sind jedoch für Emission, Effizienz, Fahrbarkeit und Geräuschkomfort die gleichen Fahrelemente maßgeblich. Durch diese gegenseitigen Abhängigkeiten müssen hier die Zielkonflikte innerhalb des einzelnen Fahrelements gelöst werden.

Mittels eines intelligenten "Eventfinders" können dabei "Bottlenecks" zuverlässig identifiziert werden. Die Identifikation dieser "Events" - also von ergebnisrelevanten Fahrelementen - erfordert die On-Line Vorgabe entsprechender Sollwerte für diese Fahrelemente und den Vergleich mit den jeweils gemessenen Istwerten. Dabei werden die Sollwerte für die einzelnen Bewertungsgrößen auf unterschiedliche Weise generiert:

- Effizienz: Die On-line Sollwertberechnung erfolgt in einem mit der Fahrzeugmessung synchronisierten Gesamtfahrzeugmodell basierend auf der gemessenen Fahrzeug-Längsdynamik und unter Berücksichtigung der aktuellen Topographie sowie sonstigen Fahrwiderständen. Das Fahrzeugmodell beinhaltet nicht nur die gesamte Hardwarekonfiguration, sondern auch die entsprechenden Betriebsstrategien. Dabei ist natürlich eine Bilanzierung über alle Energieflüsse und Energiespeicher erforderlich.

- Emissionen: Grundsätzlich könnte die Sollwertvorgabe analog zur Bewertungsgröße "Effizienz" erfolgen. Im Hinblick auf die kommende RDE Gesetzgebung ist es jedoch sinnvoller, die Bewertung entsprechend den künftig in der Gesetzgebung verankerten RDE Vorschriften durchzuführen.

- Fahrbarkeit: Hier erfolgt die Sollwertvorgabe auf Basis von objektiviertem subjektiven Fahrempfinden und der Vorgabe einer gewünschten Fahrzeugcharakteristik entsprechend der im AVL-DRIVE [2] entwickelten Systematik. Für die Objektivierung des subjektiven Fahrempfindens muss dabei das menschliche Empfinden vielfach über neuronale Netzwerke mit physikalisch messbaren Größen korreliert werden.

- NVH: Ähnlich wie bei der Fahrbarkeit wird hier die Sollwertvorgabe auf Basis des objektivierten subjektiven Geräuschempfindens und Vorgabe der gewünschten Soundcharakteristik (z.B. AVL-VOICE [4]) durchgeführt.

Für die Bewertung des Entwicklungsstandes eines Fahrzeugs ist jedoch nicht nur der Vergleich mit üblicherweise in der Konzeptphase einer Gesamtentwicklung generierten idealen Werten und Verläufen von Interesse, sondern auch die Positionierung in einem spezifischen Benchmark-Streuband. Dies ist insbesondere für Fahrzeuganalysen von Bedeutung, bei denen die für eine Sollwertberechnung erforderlichen Basisdaten nicht vollständig vorliegen. Um eine ausreichende statistische Relevanz aktueller Benchmark Daten sicherzustellen (Real Drive Manöver-Bibliothek), führt AVL z.B. allein im Jahr 2014 rund 150 Benchmark Untersuchungen der jeweils aktuellsten Fahrzeuge durch.

Die eigentliche Optimierung erfolgt durch Übertragung der ergebnisrelevanten Einzelereignisse in die jeweils bestgeeignetste Entwicklungsumgebung. Für Einzelereignisse, die primär nur eine Bewertungsgröße betreffen, erfolgt die Optimierung vielfach direkt im Fahrzeug in unmittelbarer Interaktion mit der automatisierten On-Line Bewertung (z.B. Kompensation bestimmter Fahrbarkeitsfehler).

Für diejenigen Einzelereignisse, in denen ausgeprägte Trade-Off Beziehungen zwischen den unterschiedlichen Bewertungsgrößen (z.B. Effizienz, Emissionen, Fahrbarkeit, etc.) bestehen, ist das Abbilden der relevanten Einzelereignisse am XiL-, Motor- und / oder Antriebsstrang-Prüfstand sinnvoll. Hier erlaubt das reproduzierbare Arbeiten eine effiziente Entwicklung im einzelnen Fahrelement, wobei nicht nur eine isolierte Optimierung einer Einzelgröße erfolgt, sondern die Trade-Off's (typischerweise Emission / Effizienz / Fahrbarkeit / Geräusch) optimiert werden. Durch ein simultan laufendes Gesamtfahrzeugmodell können zudem auch die Auswirkungen auf das Gesamtsystem unmittelbar beurteilt werden. Darüber hinaus erlaubt der Abgleich mit einer "Real Driving Manöver-Bibliothek" (Benchmark Daten) eine detaillierte objektive Einordnung im Konkurrenzumfeld. Diese unmittelbare Statusbewertbarkeit ermöglicht ein rasches und treffsicheres Reagieren und damit eine höhere Agilität im Entwicklungsprozess.

Die Fahrelement-Betrachtung auf Basis eines intelligenten Eventfinders erlaubt sowohl eine effiziente Kalibrierfähigkeit als auch eine treffsichere, virtuelle Identifikation von optimal passenden Antriebsarchitekturen. Dies ermöglicht auch die Erstellung einer verfeinerten Entwicklungslandkarte, in der die relevanten Entwicklungsaufgaben (sowohl für technische als auch subjektive Größen) markiert werden.

Die Verfügbarkeit einer umfassenden Manöverdatenbank mit einer entsprechenden Statistik über ergebnisrelevante Einzelereignisse, sowie eine segmentierte Betrachtung relevanter Fahrverläufe, ist somit nicht nur im Kalibrierprozess, sondern auch in der frühen Konzeptphase einer Antriebsstrangentwicklung für eine treffsichere Adressierung wichtiger ergebnisrelevanter Aufgabenstellungen unumgänglich.

3. Simultane Beherrschung der Entwicklungsvorgänge auf mehreren Entwicklungsebenen

Neben einer Segmentierung komplexer Fahrverläufe in kleine bewertbare Einzelelemente (vertikale Segmentierung) ist auch eine Kategorisierung der Systemintegration des Gesamtfahrzeugs in verschiedene System- und Komponentenebenen (horizontale Kategorisierung) eine bewährte Grundlage für effiziente Entwicklungsprozesse.

Durch die Vernetzung des fahrzeuginternen Daten- und Regelungsnetzwerkes mit der Umgebung ("Connected Powertrain") ergibt sich eine zusätzliche übergeordnete Systemebene, den "Traffic Level".

Die Segmentierung von Fahrverläufen begann ursprünglich auf Fahrzeugmodul-Ebene mit der Optimierung des Längsdynamikverhaltens des Antriebsstrangs (Fahrbarkeitsoptimierung) und wurde auf die Ebene der einzelnen Antriebsstrang-Module (z.B. Motor, Getriebe, etc.) heruntergebrochen.

Eine umfassende Akustik- und Komfortbewertung hingegen erfordert bereits die Segmentierung auf Fahrzeugebene. Auch für die Entwicklung der querdynamikrelevanten Funktionen (wie z.B. Fahrwerksabstimmung bis hin zu Fahrdynamikregelungen [5]) ist es erforderlich, auf Fahrzeugebene zu agieren.

Für die objektivierte Bewertung von Fahrerassistenzsystemen (ADAS - Advanced Driver Assistance Systems) ist die Vernetzung mit der gesamten relevanten Umweltinformation und damit die Einbeziehung der höchsten Systemebene ("Traffic-Level") notwendig.

Auch für die meisten Optimierungen auf Fahrzeug- oder Traffic-Level gelten grundsätzlich ähnliche Anforderungen hinsichtlich der Segmentierung komplexer Fahrverläufe und der Objektivierung subjektiver Größen. Die schon für die Bewertung der Antriebsstrang-Längsdynamik eingesetzten Werkzeuge können dabei auch für die Optimierung querdynamischer Funktionen verwendet werden [2]. Da sich jedoch die Segmentierung der Fahrverläufe für längs- und querdynamische Aspekte unterscheiden und (mit Ausnahme der Fahrdynamikregelung) kaum Trade-Off Beziehungen bestehen, erscheint derzeit noch eine getrennte Bearbeitung von längs- und querdynamischer Aufgaben in Hinsicht auf eine beherrschbare Entwicklungskomplexität als zielführend. Im Rennsport hingegen werden bereits heute längs- und querdynamische Problemstellungen übergreifend optimiert.

Obwohl auf Fahrzeugmodul-Ebene die wesentlichen Teilsysteme (z.B. Antriebsstrang, Karosserie & Fahrwerk, Elektrik & Elektronik) entlang eigener Prozesse entwickelt werden, ist der Gesamtfahrzeug-Entwicklungsprozess die dominierende Führungsgröße für alle anderen Systementwicklungen. Die Gesamtfahrzeugentwicklung synchronisiert somit alle einzelnen Entwicklungsaufgaben und steuert auch den Aufbau von Software-und Hardwareintegrationsstufen (Konzept- und Prototypenfahrzeuge) mit vorher festgelegten Funktionen. Erschwerend ist dabei allerdings die Tatsache, dass im Allgemeinen die Entwicklungsabläufe der einzelnen Teilsysteme in unterschiedlichen Zeitschienen laufen.

Damit erfordern die gemeinsamen Synchronisationspunkte im Gesamtfahrzeug-Entwicklungsprozess (Integrationsstufen 1 bis X) nicht nur Arbeiten auf rein virtueller oder rein realer Basis, sondern verstärkt auch in gemischt virtuell-realen Entwicklungsumgebungen.

Ein Schlüssel zur Beherrschung der Komplexität heutiger und zukünftiger Antriebskonzepte ist die frühe funktionale Integration der Teilsysteme in einem Gesamtsystem, das zur Gänze, teilweise oder auch nur virtuell verfügbar sein kann (Bild 4). Der heute gut etablierte, rein reale Integrationsstufenprozess (mit echter Hard- und Software) wird im Sinne des Frontloading zukünftig auch auf frühere Entwicklungsphasen in rein virtuellen und kombiniert virtuell-realen Entwicklungsumgebungen erweitert.

Damit können Entwicklungen auf Modul- oder Komponentenebene auch dann im Gesamtfahrzeugkontext analysiert und entwickelt werden, wenn noch keine Gesamtfahrzeugprototypen verfügbar sind. Komplexe Zusammenhänge können damit schon frühzeitig in rein virtuellen oder kombinierten virtuell/realen Entwicklungsumgebungen bewertet und beherrscht werden und bringen damit den Übergang vom digitalen Mockup (DMU) zum funktionalen Mockup (FMU).

Obwohl die finale Absicherung der Funktionen auch weiterhin im Fahrzeug erfolgt, wird auch hier ein verstärktes Frontloading eingesetzt. Mit den neuen Möglichkeiten eines kombiniert virtuell-realen Entwicklungsprozesses kann die stark steigende Zahl von Teilaufgaben in der Entwicklung nicht nur effizient gehandhabt werden, sondern bereits in früheren Entwicklungsphasen gestartet werden. Nur dadurch wird in Zukunft die Komplexität der Antriebsentwicklung überhaupt beherrschbar sein.

Dabei ist während des gesamten Entwicklungsablaufes eine Bewertung aus der Sicht des Gesamtfahrzeugs unter relevanten Einsatzbedingungen (Fahrer + Straße + Umwelt) erforderlich. Dafür werden virtuelles und reales Experiment über ein parallel laufendes Gesamtfahrzeugmodell gekoppelt.

Sowohl die funktionale Entwicklung, als auch erste Validierungen des Verbrennungsmotors laufen auf stationären und dynamischen Motorprüfständen. Die Entwicklung der Motorsteuerung und der entsprechenden Softwarefunktionalitäten inkl. Diagnosefunktionen ist sinnvollerweise auf XiL Prüfstände ausgelagert. Das parallel laufende virtuelle Gesamtfahrzeugmodell (Restfahrzeug) mit Fahrwiderständen, Aufbau, Achsen, Federung, Lenkung, Bremsanalage erlaubt eine kontinuierliche Beurteilung der Zielerreichung hinsichtlich Fahrzeug-Verbrauch, -Emission, und Dynamik.

Insbesondere für die Abstimmung, Kalibrierung und Validierung von Hybridfunktionen stellt die Anordnung Verbrennungsmotor-, Getriebe- und Elektromotor-Hardware am Antriebsstrangprüfstand eine höchst effiziente Entwicklungsumgebung dar. Alle Entwicklungsaufgaben hingegen, für die nicht die gesamte Antriebsstrang-Hardware erforderlich ist (z. B. Entwicklung / Kalibrierung von Diagnosefunktionen), werden parallel in einer XiL Umgebung abgearbeitet.

Je nach Aufgabenstellung und verfügbarer Fahrzeug-Hardware erfolgt die Erprobung am Antriebsstrangprüfstand mit oder ohne Fahrzeug, auf dem Rollenprüfstand sowie auf der Straße im Aggregateträger bzw. im Fahrzeugprototyp. Da am Antriebsstrangprüfstand die Versuchsbedingungen (Fahrer, Strecke, Beladung, Wind, Höhe, Klima etc.) sowie auch die Parameter des Restfahrzeuges (Fahrwiderstände, Aufbau, Achsen, Federung, Lenkung etc. - Variantensimulation) vergleichsweise rasch variiert werden können, ist es selbst bei Verfügbarkeit der gesamten Hardware inkl. Fahrzeug vielfach vorteilhaft, sowohl die Entwicklung als auch die Validierung komplexer Systeme (z.B. eines völlig neuen Hybridsystems) verstärkt auf dem Antriebsstrangprüfstand durchzuführen.

Die Aufteilung von Arbeitsinhalten auf die jeweils bestgeeignete Entwicklungsumgebung gewinnt insbesondere im Bereich der Validierung entscheidend an Bedeutung. Die Kombination von drastisch steigender Systemkomplexität und verkürzten Entwicklungszeiten erfordert nicht nur bei der funktionalen Entwicklung, sondern insbesondere auch bei der funktionalen Validierung ein verstärktes Frontloading. Die Validierung im Gesamtsystem erfolgt dabei nicht mehr ausschließlich hardwarebasiert sondern in unterschiedlichsten Kombinationen von realen und virtuellen Komponenten in einer gemischt virtuell-realen Entwicklungsumgebungen (z.B. "virtuelle Landstraße am Prüfstand - virtuelle Strecke - virtueller Fahrer).

Für komplexe Systeme ist eine effiziente und umfassende Validierung der funktionalen Sicherheit entscheidend. Basis für die Validierung stellt dabei ein präzise generiertes Kollektiv relevanter Testsequenzen dar, das mittels einer detaillierten Systemanalyse, Bewertung und Klassifizierung möglicher Betriebs- und Missbrauchsszenarien sowie umfassender FMEA's (Failure Mode and Effects Analysis) erstellt werden muss. Durch ein hohes Maß an Systematisierung und Automatisierung können damit potentiell kritische Betriebszustände in wesentlich kürzerer Zeit als im herkömmlichen Straßenversuch abgeprüft werden.

Die Vorab-Selektion dieser potentiell kritischen Zustände bedingt natürlich das Risiko, dass das Versuchsprogramm lediglich Antworten auf explizit gestellte Fragestellungen liefert, andere Risikopunkte jedoch nicht adressiert werden. Durch zusätzliche, aus der Manöverdatenbank generierte Validierungssequenzen wird dieses Risiko in Zukunft verkleinert.

4. Vom DMU (Digital Mock Up) zum FMU (Functional Mock Up) oder von der "Tool-Chain" für den klassischen Entwicklungs-vorgang zum "Tool-Network" für einen integralen, mehrschichtigen Entwicklungsprozess

Im realen Entwicklungsablauf erfordert die Parallelität von virtuellen, numerischen Bauteilmodellen und tatsächlich verfügbaren Hardware-Baustufen bereits heute und verstärkt in der Zukunft vielfach ein "Springen" zwischen virtuellem und "realem" Experiment, wobei heute vielfach das "reale" Experiment schon Simulationen beinhaltet. Für ein agiles Entwickeln müssen Simulation und Hardware nahtlos ineinander greifen und miteinander austauschbar sein. In vielen Fällen ist die dafür erforderliche Durchgängigkeit der Entwicklungswerkzeuge noch nicht gegeben. Die integrierte, offene Entwicklungsplattform AVL-IODP (Integrated Open Development Platform) bildet diese Durchgängigkeit der gesamten Entwicklungsumgebungen konsequent ab.

Wesentliche Aspekte der konsequenten Anwendung einer integrierten, durchgängigen Entwicklungsplattform, die zudem für unterschiedlichste Werkzeuge offen ist, sind:

• Durchgängige Prozesse und Methoden erlauben ein "Front Loading" von Entwicklungsaufgaben, die bisher z.B. weitgehend im Straßenversuch durchgeführt wurden, in zeitlich frühere Entwicklungsphasen auf dem Motor- oder Antriebsstrang-prüfstand - im Extremfall auch in einer rein virtuellen Simulationsumgebung (Office Simulation). So kann z.B. die Vorkalibrierung eines Motors in einer kombiniert real-virtuellen Entwicklungsumgebung mit einer vergleichbaren Ergebnisqualität wesentlich rascher als im reinen Straßenversuch durchgeführt werden.

• Durchgängigkeit der Simulationsmodelle: Simulationsmodelle, die in frühen Entwicklungsphasen erstellt wurden, können auch in nachgelagerten Entwicklungsphasen und -umgebungen wiederverwenden werden. Diese Simulationsmodelle ergänzen (als virtuelle Bauteile) die Hardware-Entwicklungsumgebungen (d.h. Prüfstände) zu einer gemischt virtuell-realen Entwicklungsumgebung, mit der Wechselwirkungen auf Gesamtfahrzeugebene dargestellt werden können.

- Durchgängige Vergleichbarkeit von virtuellen und realen Versuchen mittels konsistentem Datenmanagement und nahtloser Durchgängigkeit der Modelle und Methoden. Ergebnisse, die mittels Simulation generiert werden, müssen einerseits konsistent zu den entsprechenden realen Versuchen sein und andererseits im Zuge des Entwicklungsprozesses auch eine Weiterentwicklung der Simulationsmodelle auf Basis von Versuchsergebnissen erlauben. Die Möglichkeit dieses ständigen, konsistenten Abgleichs zwischen virtueller, realer und kombiniert virtuell-realer Welt ist die Voraussetzung für einen agilen, modernen Entwicklungsprozess.

- Durchgängige Parametrierung von Modellen und Versuchen: Vor allem bei der Steuergerät-Kalibrierung müssen eine Vielzahl von Eingangsparameter wie z.B. Umgebungsbedingungen, Fahrmanöver, Kalibrierdatensätze, etc. verwaltet werden. Um hier später die Ergebnisse zwischen virtuellem und realem Versuch vergleichen zu können, müssen auch die Eingangsdatensätze vergleichbar und konsistent im Prozess verfügbar sein.

- Durchgängige Einbettung in bestehende Prozessumgebungen: Natürlich ist es notwendig, laufend neue bzw. verbesserte Entwicklungswerkzeuge in bestehende Prozesse und Prozessumgebungen integrieren zu können. Deshalb muss eine solche Entwicklungsplattform offen sein im Sinne einerseits der Integration virtueller, realer und sowie kombiniert virtuell-realer Werkzeuge und andererseits des Datenmanagements. Bevorzugt wird ein "bottom up approach" angestrebt, der es erlaubt, auch bestehende Werkzeuge und Tools zu integrieren. Dadurch kann auf bestehendem Know-How und gut etablierten Werkzeugen aufgebaut werden.

Damit wird diese Entwicklungsplattform IODP zur Basis für einen durchgängigen, modelbasierten Entwicklungsprozess und erweitert herkömmliche Werkzeugketten zu einem integrierten und konsistenten Netzwerk: "Von einer sequentiellen Tool-Chain zum Tool-Network". In dieser Plattform können virtuelle und reale Komponenten des Antriebes zu jedem Zeitpunkt des Entwicklungsprozesses auf Gesamtfahrzeugebene integriert werden und jeweils passende Entwicklungsumgebungen konfiguriert werden. Dieses Toolnetzwerk stellt somit auch einen Werkzeug-Baukasten für einen möglichst agilen Entwicklungsprozess dar.

Konsequenterweise erfordert das Vernetzen der Entwicklungswerkzeuge auch eine vernetzte Bewertungsplattform, in der das Entwicklungsergebnis permanent nicht nur auf Komponenten- und Systemebene, sondern auch auf Gesamtfahrzeugebene bewertet werden kann.

Einen ersten Ansatz in Richtung einer übergreifenden Bewertungsplattform stellt schon seit Jahren die Fahrbarkeitsbewertung mit AVL-DRIVE dar. Die Struktur dieser Bewertungsplattform erlaubt es, eine durchgängige Fahrbarkeitsbewertung mit allen relevanten Werkzeugen - von der Office-Simulation bis hin zum Straßentest des realen Fahrzeugs - durchzuführen. AVL DRIVE-V 4.0 erweitert diese Bewertungsplattform in den nächsten Ausbaustufen um

 o Emissionsbewertung entsprechend den Vorgaben der RDE Gesetzgebung
 o Effizienzbewertung mit On-Line Berechnung des idealen Sollwertes inkl. Positionierung im Benchmark-Umfeld
 o Bewertung des subjektiven Geräuschempfindens

Damit ist eine durchgängige Bewertung der wesentlichsten Beurteilungsgrößen von der Simulation über Motor-, Antriebsstrang- und Rollenprüfstand bis hin zum Straßenversuch möglich.

5. Ausblick

Die konsequente Weiterführung dieser modelbasierten Entwicklungsmethoden mit Fahrelement basierter Bewertung erlaubt es zukünftig auch Advanced Driver Assistance Systeme (ADAS), automatisiertes Fahren sowie den "Connected Powertrain" im "Connected Vehicle"-Verbund bereits in einer virtuellen Umgebung gezielt zu entwickeln und damit einen umfassenden Frontloading-Ansatz effizient umzusetzen [2]. In Erweiterung zum Prüfstands- und Simulationsaufbau müssen hier zusätzlich Straße, Infrastruktur, Verkehrsobjekte und die entsprechenden Umgebungssensoren wie Radar, Lidar, Ultraschall, 2D- und 3D-Kamera auf dem Antriebstrangprüfstand als Restfahrzeug und Umgebung simuliert werden. Damit die kartenbasierten Funktionen wie zum Beispiel für das vorausschauende Energiemanagement auf Basis des Navigationssystems (z.B. e-Horizon) in der Prüfstandszelle funktioniert, können dazu die GPS Signale auf beliebigen Positionen der Erde emuliert und gesendet werden.

Mit dem dargestellten Aufbau lassen sich schließlich die funktionale Sicherheit, die korrekten Funktionen sowie die Performance im Hinblick auf Emissions-, Verbrauchs-, Fahrleistungs-, Sicherheits- und Komfortverhalten in verschiedenen Fahrmanövern und Verkehrsszenarien im Gesamtverbund sowie auch das subjektive Fahrerempfinden reproduzierbar bewerten.

Durch die steigende Komplexität der Entwicklungsaufgaben und die Notwendigkeit, in Zukunft umfassende Werkzeugnetzwerke anstelle von Werkzeugketten handzuhaben, wird es für den Entwicklungsingenieur immer schwieriger, alle diese Werkzeuge optimal einzusetzen und die Rückmeldungen bzw. Ergebnisse von virtuellen und realen Tests richtig zu bewerten und in die weitere Entwicklung einfließen zu lassen. Es wird daher notwendig sein, auch die Werkzeuge selbst noch "intelligenter" zu "Smart Cyber-Physical-Systems" zu machen. Solche "intelligenten" Werkzeuge werden den Ingenieur noch besser bei seiner Arbeit unterstützen. Diese Tools werden die physikalischen Prozesse des Prüflings, sowie die Zusammenhänge der Entwicklungsaufgabe kennen und dadurch die Messdaten verstehen; von der automatischen Daten-Plausibilisierung bis hin zur effizienten Analyse und intelligenten Interpretation großer Datenmengen. Trotzdem erfordern diese zunehmend komplexen Aufgaben in übergreifenden Entwicklungsumgebungen auch eine generische Arbeitsweise des Entwicklers - den "vernetzten Entwicklungsingenieur" - der sich unter anderem auch schnell zwischen verschiedenen Systemebenen bewegen kann.

**Literatur:**

[1] List, H. O.: "Künftige Antriebssysteme im rasch veränderlichen globalen Umfeld"; 30. Internationales Wiener Motorensymposium, 7.-8. Mai 2009

[2] List, H.; Schoeggl, P.: "Objective Evaluation of Vehicle Driveability", SAE Technical Paper 980204, 1998, doi:10.4271/980204

[3] Fischer, R; Küpper, K.; Schöggl, P.: "Antriebsoptimierung durch Fahrzeugvernetzung"; 35. Internationales Wiener Motorensymposium, 8.-9. Mai 2014

[4] Biermayer, W.; Thomann, S.; Brandl, F.: "A Software Tool for Noise Quality and Brand Sound Development", SAE 01NVC-138, Traverse City, 30 April - 3 May 2001

[5] Schrauf, M.; Schöggl, P.: "Objektivierung der Driveability von Automatisiertem / Autonomem Fahren", AVL Motor und Umwelt Tagung 2013, 5.-6.9. 2013, Graz

[6] Hirose,T.; Sugiura,T.; Weck, T:; Pfister, F.: "How To Achieve Real-Life Test Coverage Of Advanced 4-Wheel-Drive Hybrid Applications", CTI Berlin, 2013

**Bezugszeichenliste:**

| | |
|---|---|
| System | 1 |
| Fahrzeug | 2 |
| Antriebseinrichtung | 3 |
| Erste Einrichtung | 4 |
| Zweite Einrichtung | 5 |
| Dritte Einrichtung | 6 |
| Erste Vergleichseinrichtung | 7 |
| Zuordnungseinrichtung | 8 |
| Verarbeitungseinrichtung | 9 |
| Fünfte Einrichtung | 10 |
| Zweite Vergleichseinrichtung | 11 |
| Ausgabeeinrichtung | 12 |
| Auswahleinrichtung | 13 |
| Vierte Einrichtung | 14a, 14b, 14c, 14d |
| Energiespeicher | 15 |
| Lenkungsaktuator | 16 |
| Lenkungssteuerung | 17 |
| Radial | 18a, 18b, 18c, 18d |
| Getriebe | 19 |
| Lenkungsbetätigung bzw. Lenkrad | 20 |
| Differenzial | 21 |
| Abgasnachbehandlung | 22 |
| Abgasanalyseeinrichtung | 23 |
| Abgasanlage | 24 |
| Datenspeicher | 25 |

**Patentansprüche**

1. System (1) zur Analyse einer Energieeffizienz eines Fahrzeugs (2) mit wenigstens einer Antriebseinrichtung (3), welche eingerichtet ist, durch Energieumwandlung mechanische Antriebskraft zu erzeugen, aufweisend:

   eine erste Einrichtung (4), insbesondere ein Sensor, eingerichtet zum Erfassen eines ersten Datensatzes wenigstens eines ersten Parameters, welcher geeignet ist, eine Energie, welche das Fahrzeug (2) verbraucht, zu charakterisieren;
   eine zweite Einrichtung (5), insbesondere ein Sensor, eingerichtet zum Erfassen eines zweiten Datensatzes wenigstens eines zweiten Parameters, welcher geeignet ist, einen Fahrwiderstand, welchen das Fahrzeugs (2) überwindet, zu charakterisieren;
   eine dritte Einrichtung (6), insbesondere ein Sensor, eingerichtet zum Erfassen eines dritten Datensatzes wenigstens eines dritten Parameters, welcher geeignet ist, wenigstens einen Fahrzustand des Fahrzeugs (2) zu charakterisieren;
   eine erste Vergleichseinrichtung (7), insbesondere Teil einer Datenverarbeitungseinrichtung, eingerichtet zum Vergleichen der Werte des dritten Datensatzes mit vordefinierten Parameterbereichen, welche wenigstens einem Fahrzustand entsprechen;
   eine Zuordnungseinrichtung (8), insbesondere Teil einer Datenverarbeitungseinrichtung, eingerichtet zum Zuordnen der Werte des ersten Datensatzes und der Werte des zweiten Datensatzes zu dem jeweils vorliegenden wenigstens einen Fahrzustand;
   eine Verarbeitungseinrichtung (9), insbesondere Teil einer Datenverarbeitungseinrichtung, eingerichtet zum Ermitteln wenigstens eines Kennwerts, welcher die Energieeffizienz des Fahrzeugs (2) charakterisiert, auf der Grundlage des ersten Datensatzes und des zweiten Datensatzes in Abhängigkeit des wenigstens einen Fahrzustands;
   eine Auswahleinrichtung (13), eingerichtet zum Festlegen wenigstens einer Vorrichtung A, deren Energieverbrauch beim Ermitteln des wenigstens einen Kennwerts der Energieeffizienz des Fahrzeugs (2) unberücksichtigt bleibt; und
   eine vierte Einrichtung (14), eingerichtet zum Erfassen eines weiteren zweiten Parameters, welcher den Energieverbrauch der wenigstens einen Vorrichtung A charakterisiert, wobei die Verarbeitungseinrichtung (9) des Weiteren eingerichtet ist, den Energieverbrauch des Fahrzeugs (2) um den Energieverbrauch der wenigstens einen Vorrichtung A zu bereinigen.

2. System (1) gemäß Anspruch 1, **dadurch gekennzeichnet, dass** es des Weiteren aufweist:

   eine fünfte Einrichtung (10), insbesondere eine Schnittstelle, eingerichtet zum Erfassen eines Sollwerts für den wenigstens einen Kennwert, insbesondere auf der Grundlage eines Fahrzeugmodells oder eines Referenzfahrzeugs;
   eine zweite Vergleichseinrichtung (11), insbesondere Teil einer Datenverarbeitungseinrichtung, eingerichtet zum Abgleich des Kennwerts mit dem Sollwert zum Bestimmen einer Bewertung; und
   eine Ausgabeeinrichtung (12), insbesondere eine Anzeige, eingerichtet Ausgeben der Bewertung auf der Grundlage des Abgleichs.

3. System (1) gemäß Anspruch 1 oder 2, **dadurch gekennzeichnet, dass** es des Weiteren eine Speichereinrichtung (25) aufweist, eingerichtet, eine Abfolge der Fahrzustände zu speichern, und dass die Verarbeitungseinrichtung (9) des Weiteren eingerichtet ist, beim Ermitteln des Kennwerts die Abfolge der Fahrzustände zu berücksichtigen.

4. System gemäß einem der Ansprüche 1 bis 3, **dadurch gekennzeichnet**, die Verarbeitungseinrichtung (9) des Weiteren eingerichtet ist, eine Zuordnung der Werte des ersten Datensatzes und des zweiten Datensatzes zu dem wenigstens einen vordefinierten Fahrzustand zu korrigieren, um eine Signallaufzeit und/oder um eine Laufzeit wenigstens eines Messmediums zum Erfassen des jeweiligen Datensatzes bis zu einem Sensor zu berücksichtigen.

5. Verfahren (100) zur Analyse einer Energieeffizienz eines Fahrzeugs (2) mit wenigstens einer Antriebseinrichtung (3), welche eingerichtet ist, durch Energieumwandlung mechanische Antriebskraft zu erzeugen, folgende Arbeitsschritte aufweisend:

   Erfassen (101) eines ersten Datensatzes wenigstens eines ersten Parameters, welcher geeignet ist, eine Energie, welche das Fahrzeug (2) verbraucht, zu charakterisieren;
   Erfassen (102) eines zweiten Datensatzes wenigstens eines zweiten Parameters, welcher geeignet ist, einen Fahrwiderstand, welchen das Fahrzeugs (2) überwindet, zu charakterisieren;

Erfassen (103) eines dritten Datensatzes wenigstens eines dritten Parameters, welcher geeignet ist, wenigstens einen Fahrzustand zu charakterisieren;

Vergleichen (104) der Werte des dritten Datensatzes mit vordefinierten Parameterbereichen, welche wenigstens einem Fahrzustand entsprechen;

Zuordnen (105) der Werte des ersten Datensatzes und der Werte des zweiten Datensatzes zu dem jeweils vorliegenden wenigstens einen Fahrzustand; und

Ermitteln (111) wenigstens eines Kennwerts, welcher die Energieeffizienz des Fahrzeugs charakterisiert, auf der Grundlage des ersten Datensatzes und des zweiten Datensatzes in Abhängigkeit des wenigstens einen Fahrzustands,

wobei , der wenigstens eine zweite Parameter des Weiteren einen Betriebszustand und/oder einen Energieverbrauch wenigstens einer Vorrichtung A des Fahrzeugs (2) charakterisiert und/oder dass das Verfahren (100) die Weiteren Arbeitsschritte aufweist:

Festlegen (106) der wenigstens einer Vorrichtung A, deren Energieverbrauch beim Ermitteln des wenigstens einen Kennwerts der Energieeffizienz des Fahrzeugs unberücksichtigt bleibt; und

Bereinigen (107) des Energieverbrauchs des Fahrzeugs (2) um den Energieverbrauch der wenigstens einen Vorrichtung.

6. Verfahren (100) gemäß Anspruch 5, **dadurch gekennzeichnet, dass** es des Weiteren folgende Arbeitsschritte aufweist:

Erfassen (113) eines Sollwerts für den wenigstens einen Kennwert, insbesondere auf der Grundlage eines Fahrzeugmodells oder eines Referenzfahrzeugs;

Abgleichen (114) des Kennwerts mit dem Sollwert zum Bestimmen einer Bewertung; und

Ausgeben (115) der Bewertung auf der Grundlage des Abgleichens (114).

7. Verfahren (100) gemäß Anspruch 5 oder 6, **dadurch gekennzeichnet, dass** der wenigstens eine zweite Parameter des Weiteren geeignet ist, eine Topographie einer Umgebung des Fahrzeugs (2) zu charakterisieren.

8. Verfahren (100) gemäß einem der Ansprüche 5 bis 7, **dadurch gekennzeichnet, dass** die wenigstens eine Vorrichtung A für den Fahrbetrieb des Fahrzeugs (2) notwendig ist oder eine vom Fahrbetrieb unabhängige Funktion erfüllt.

9. Verfahren (100) gemäß einem der Ansprüche 5 bis 8, **dadurch gekennzeichnet, dass** die wenigstens eine Antriebseinrichtung (3) eine Brennkraftmaschine oder eine Elektromaschine mit einem Brennstoffzellensystem ist und der erste Parameter wenigstens eine Emission der Brennkraftmaschine oder des Brennstoffzellensystems angibt.

10. Verfahren gemäß einem der Ansprüche 5 bis 9, **dadurch gekennzeichnet, dass** der wenigstens eine erste Parameter zusätzlich geeignet ist, eine Emission, eine Fahrbarkeit und/oder einen NVH-Komfort des Fahrzeugs (2) zu charakterisieren und dass das Verfahren des Weiteren den folgenden Arbeitsschritt aufweist:

Auswählen (112) wenigstens eines Betriebsmodus des Fahrzeugs, von welchem die Bewertung zusätzlich abhängt, aus der folgenden Gruppe von Betriebsmodi:

Effizienzorientierter Betriebsmodus, emissionsreduktionsorientierter Betriebsmodus, fahrbarkeitsorientierter Betriebsmodus, NVH-komfortorientierter Betriebsmodus.

11. Verfahren (100, 200) gemäß einem der Ansprüche 5 bis 10, **dadurch gekennzeichnet, dass** die Arbeitsschritte so lange ausgeführt werden, dass sich der dritte Datensatz über mehrere verschiedene Fahrzustände erstreckt.

12. Verfahren (100, 200) gemäß einem der Ansprüche 5 bis 11, **dadurch gekennzeichnet, dass** es des Weiteren folgenden Arbeitsschritt aufweist:

Erfassen (108, 208) der Abfolge der Fahrzustände, wobei beim Ermitteln des Kennwerts die Abfolge der Fahrzustände berücksichtigt wird.

13. Verfahren (100, 200) gemäß einem der Ansprüche 5 bis 12, **dadurch gekennzeichnet, dass** die Werte des ersten Datensatzes und/oder des zweiten Datensatzes über die Zeitdauer des jeweiligen Fahrzustandes integriert werden.

14. Verfahren (100, 200) gemäß einem der Ansprüche 5 bis 13, **dadurch gekennzeichnet, dass** die Werte mehrerer dritter Datensätze für eine gleiche Art von Fahrzustand zur Ermittlung des wenigstens einen Kennwerts zusammengefasst werden.

**15.** Verfahren (100, 200) gemäß einem der Ansprüche 5 bis 14, **dadurch gekennzeichnet, dass** es des Weiteren folgenden Arbeitsschritt aufweist:
Korrigieren (109, 209) einer Zuordnung der Werte des ersten Datensatzes und des zweiten Datensatzes zu dem wenigstens einen vordefinierten Fahrzustand, um eine Signallaufzeit und/oder um eine Laufzeit wenigstens eines Messmediums zum Erfassen des jeweiligen Datensatzes bis zu einem Sensor zu berücksichtigen.

**16.** Verfahren gemäß einem der Ansprüche 5 bis 15, **dadurch gekennzeichnet, dass** die Parameterwerte der Datensätze in einem Real-Drive-Betrieb des Fahrzeugs (2) erfasst werden, wobei bevorzugt das reale Fahrzeug eine nach stochastischen Prinzipien ausgewählte reale Fahrstrecke zurücklegt, bevorzugter ein reales Fahrzeug eine nach stochastischen Prinzipien ausgewählte wenigstens teilweise simulierte Fahrstrecke zurücklegt, noch bevorzugter ein wenigstens teilweise simuliertes Fahrzeug eine nach stochastischen Prinzipien ausgewählte wenigstens teilweise simulierte Fahrstrecke zurücklegt, und am bevorzugtesten ein simuliertes Fahrzeug eine nach stochastischen Prinzipien ausgewählte simulierte Fahrstrecke zurücklegt.

**17.** Verfahren gemäß einem der Ansprüche 5 bis 16, **dadurch gekennzeichnet, dass** ein Kennwert nur dann ermittelt wird, wenn wenigstens ein vorbestimmter Fahrzustand vorliegt und/oder wenn der erste Datensatz und/oder der zweite Datensatz vorbestimmte Kriterien erfüllen.

**18.** Computerprogramm, das Anweisungen aufweist, die, wenn sie von einem Rechner ausgeführt werde, diesen dazu veranlassen, ein Verfahren nach einem der Ansprüche 5 bis 17 auszuführen.

**19.** Computer-lesbares Speichermedium, auf welchem ein Computerprogramm gemäß Anspruch 18 abgespeichert ist.

**Claims**

**1.** System (1) for analyzing an energy efficiency of a vehicle (2) with at least one drive device (3), which is set up to generate mechanical drive force by energy conversion, comprising:

a first device (4), in particular a sensor, adapted to acquire a first set of data of at least one first parameter suitable to characterize an energy consumed by the vehicle (2);
a second device (5), in particular a sensor, adapted to acquire a second set of data of at least one second parameter suitable to characterize a driving resistance which the vehicle (2) overrides;
a third device (6), in particular a sensor, set up for acquiring a third data set of at least one third parameter which is suitable for characterizing at least one driving state of the vehicle (2);
a first comparison device (7), in particular part of a data processing device, set up for comparing the values of the third data set with predefined parameter ranges which correspond to at least one driving state;
an assignment device (8), in particular part of a data processing device, set up for assigning the values of the first data record and the values of the second data record to the at least one driving state present in each case;
a processing device (9), in particular part of a data processing device, arranged to determine at least one characteristic value characterizing the energy efficiency of the vehicle (2) on the basis of the first data set and the second data set as a function of the at least one driving state;
a selection device (13) arranged to determine at least one device A whose energy consumption is disregarded when determining the at least one characteristic value of the energy efficiency of the vehicle (2); and
a fourth means (14) adapted to detect a further second parameter characterizing the energy consumption of the at least one device A, wherein the processing means (9) is further set up to adjust the energy consumption of the vehicle (2) for the energy consumption of the at least one device A.

**2.** System (1) according to claim 1, **characterized in that** it further comprises:

a fifth device (10), in particular an interface, set up for detecting a setpoint for the at least one characteristic value, in particular on the basis of a vehicle model or a reference vehicle;
a second comparison device (11), in particular part of a data processing device, set up for comparing the characteristic value with the setpoint value in order to determine an evaluation; and
an output device (12), in particular a display, set up outputting the evaluation based on the matching.

3. System (1) according to claim 1 or 2, **characterized in that** it further comprises memory means (25) arranged to store a sequence of said driving states, and **in that** said processing means (9) is further arranged to take into account said sequence of driving states when determining said characteristic value.

4. A system according to any one of claims 1 to 3, **characterized in that** the processing device (9) is further adapted to correct an assignment of the values of the first data set and the second data set to the at least one predefined driving state to take into account a signal propagation time and/or to take into account a propagation time of at least one measuring medium for detecting the respective data set up to a sensor.

5. Method (100) for analyzing an energy efficiency of a vehicle (2) having at least one drive device (3) which is set up to generate mechanical drive force by energy conversion, having the following working steps:

    Acquiring (101) a first data set of at least a first parameter suitable to characterize an energy consumed by the vehicle (2);
    acquiring (102) a second set of data of at least a second parameter suitable to characterize a driving resistance that the vehicle (2) overrides;
    Acquiring (103) a third data set of at least one third parameter suitable for characterizing at least one driving state;
    Comparing (104) the values of the third data set with predefined parameter ranges corresponding to at least one driving state;
    associating (105) the values of the first data set and the values of the second data set with the respective present at least one driving state; and
    Determining (111) at least one parameter characterizing the energy efficiency of the vehicle based on the first data set and the second data set as a function of the at least one driving state,
    wherein the at least one second parameter further characterizes an operating state and/or an energy consumption of at least one device A of the vehicle (2) and/or that the method (100) comprises the further steps:

        determining (106) the at least one device A whose energy consumption is disregarded when determining the at least one energy efficiency characteristic of the vehicle; and
        Adjusting (107) the energy consumption of the vehicle (2) for the energy consumption of the at least one device.

6. A method (100) according to claim 5, **characterized in that** it further comprises the following steps:

    Detecting (113) a setpoint for the at least one characteristic value, in particular based on a vehicle model or a reference vehicle;
    aligning (114) the characteristic value with the target value to determine a score; and
    Outputting (115) the rating based on the matching (114).

7. A method (100) according to claim 5 or 6, **characterized in that** the at least one second parameter is further adapted to characterize a topography of an environment of the vehicle (2).

8. Method (100) according to any one of claims 5 to 7, **characterized in that** the at least one device A is necessary for the driving operation of the vehicle (2) or fulfills a function independent of the driving operation.

9. Method (100) according to any one of claims 5 to 8, **characterized in that** the at least one drive device (3) is an internal combustion engine or an electric machine with a fuel cell system and the first parameter specifies at least one emission of the internal combustion engine or the fuel cell system.

10. A method according to any one of claims 5 to 9, **characterized in that** the at least one first parameter is additionally suitable for characterizing an emission, a drivability and/or an NVH comfort of the vehicle (2) and that the method further comprises the following step:
    Selecting (112) at least one operating mode of the vehicle, on which the evaluation additionally depends, from the following group of operating modes:
    Efficiency oriented operation mode, emission reduction oriented operation mode, drivability oriented operation mode, NVH comfort oriented operation mode.

11. A method (100, 200) according to any one of claims 5 to 10, **characterized in that** the steps are performed for a time such that the third data set extends over a plurality of different driving states.

**12.** A method (100, 200) according to any one of claims 5 to 11, **characterized in that** it further comprises the following step:
detecting (108, 208) the sequence of driving states, wherein the sequence of driving states is taken into account when determining the characteristic value.

**13.** Method (100, 200) according to any one of claims 5 to 12, **characterized in that** the values of the first data set and/or the second data set are integrated over the time duration of the respective driving state.

**14.** A method (100, 200) according to any one of claims 5 to 13, **characterized in that** the values of a plurality of third data sets for a same type of driving state are combined to determine the at least one characteristic value.

**15.** A method (100, 200) according to any one of claims 5 to 14, **characterized in that** it further comprises the following step:
correcting (109, 209) an assignment of the values of the first data set and the second data set to the at least one predefined driving state to account for a signal propagation time and/or to account for a propagation time of at least one measurement medium for detecting the respective data set up to a sensor.

**16.** Method according to any one of claims 5 to 15, **characterized in that** the parameter values of the data sets are acquired in a real-drive operation of the vehicle (2), preferably the real vehicle covering a real driving distance selected according to stochastic principles, more preferably a real vehicle covering an at least partially simulated driving distance selected according to stochastic principles, even more preferably an at least partially simulated vehicle covers an at least partially simulated driving distance selected according to stochastic principles, and most preferably a simulated vehicle covers a simulated driving distance selected according to stochastic principles.

**17.** Method according to any one of claims 5 to 16, **characterized in that** a characteristic value is determined only if at least one predetermined driving state is present and/or if the first data set and/or the second data set fulfill predetermined criteria.

**18.** A computer program comprising instructions which, when executed by a computer, cause the computer to perform a method according to any one of claims 5 to 17.

**19.** A computer-readable storage medium on which a computer program according to claim 18 is stored.

## Revendications

**1.** Système (1) pour l'analyse d'une efficacité énergétique d'un véhicule (2) avec au moins un équipement d'entraînement (3), lequel est mis au point pour produire par transformation d'énergie une force d'entraînement mécanique, présentant :

un premier équipement (4), en particulier un capteur, mis au point pour détecter un premier jeu de données d'au moins un premier paramètre, lequel est adapté pour caractériser une énergie que le véhicule (2) consomme ;
un deuxième équipement (5), en particulier un capteur, mis au point pour détecter un deuxième jeu de données d'au moins un deuxième paramètre, lequel est adapté pour caractériser une résistance à l'avancement que le véhicule (2) surmonte ;
un troisième équipement (6), en particulier un capteur, mis au point pour détecter un troisième jeu de données d'au moins un troisième paramètre, lequel est adapté pour caractériser au moins un état de marche du véhicule (2) ; un premier équipement de comparaison (7), en particulier faisant partie d'un équipement de traitement de données, mis au point pour comparer les valeurs du troisième jeu de données à des plages de paramètres prédéfinies, lesquelles correspondent à au moins un état de marche ;
un équipement d'association (8), en particulier faisant partie d'un équipement de traitement de données, mis au point pour associer les valeurs du premier jeu de données et les valeurs du deuxième jeu de données à l'au moins un état de marche respectivement présent ;
un équipement de traitement (9), en particulier faisant partie d'un équipement de traitement de données, mis au point pour déterminer au moins une valeur caractéristique, laquelle caractérise l'efficacité énergétique du véhicule (2), sur la base du premier jeu de données et du deuxième jeu de données en fonction de l'au moins un état de marche ; un équipement de sélection (13) mis au point pour fixer au moins un dispositif A, dont la consommation d'énergie n'est toujours pas prise en compte lors de la détermination de l'au moins une valeur caractéristique de l'efficacité énergétique du véhicule (2) ; et
un quatrième équipement (14) mis au point pour détecter un autre deuxième paramètre, lequel caractérise la consommation d'énergie de l'au moins un dispositif A, dans lequel l'équipement de traitement (9) est mis au point par ailleurs pour rectifier la consommation d'énergie du véhicule (2) par soustraction de la consommation d'énergie de l'au moins un dispositif A.

2. Système (1) selon la revendication 1, **caractérisé en ce qu'**il présente par ailleurs :

un cinquième équipement (10), en particulier une interface, mis au point pour détecter une valeur théorique pour l'au moins une valeur caractéristique, en particulier sur la base d'un modèle de véhicule ou d'un véhicule de référence ; un deuxième équipement de comparaison (11), en particulier faisant partie d'un équipement de traitement de données, mis au point pour mettre en regard la valeur caractéristique avec la valeur théorique pour définir une évaluation ; et
un équipement d'édition (12), en particulier un affichage, mis au point pour éditer l'évaluation sur la base de la mise en regard.

3. Système (1) selon la revendication 1 ou 2, **caractérisé en ce qu'**il présente par ailleurs un équipement de stockage (25) mis au point pour stocker une séquence des états de marche, et que l'équipement de traitement (9) est mis au point par ailleurs pour tenir compte de la séquence des états de marche lors de la détermination de la valeur caractéristique.

4. Système selon l'une quelconque des revendications 1 à 3, **caractérisé en ce que** l'équipement de traitement (9) est mis au point par ailleurs pour corriger une association des valeurs du premier jeu de données et du deuxième jeu de données à l'au moins un état de marche prédéfini pour tenir compte d'un temps de propagation de signal et/ou d'un temps de propagation d'au moins un milieu de mesure pour détecter le jeu de données respectif jusqu'à un capteur.

5. Procédé (100) pour l'analyse d'une efficacité énergétique d'un véhicule (2) avec au moins un équipement d'entraînement (3), lequel est mis au point pour produire par transformation d'énergie une force d'entraînement mécanique, présentant des étapes de travail suivantes :

la détection (101) d'un premier jeu de données d'au moins un premier paramètre, lequel est adapté pour caractériser une énergie que le véhicule (2) consomme ;
la détection (102) d'un deuxième jeu de données d'au moins un deuxième paramètre, lequel est adapté pour caractériser une résistance à l'avancement que le véhicule (2) surmonte ;
la détection (103) d'un troisième jeu de données d'au moins un troisième paramètre, lequel est adapté pour caractériser au moins un état de marche ;
la comparaison (104) des valeurs du troisième jeu de données à des plages de paramètres prédéfinies, qui correspondent à au moins un état de marche ;
l'association (105) des valeurs du premier jeu de données et des valeurs du deuxième jeu de données à l'au moins un état de marche respectivement présent ; et
la détermination (111) d'au moins une valeur caractéristique, laquelle caractérise l'efficacité énergétique du véhicule, sur la base du premier jeu de données et du deuxième jeu de données en fonction de l'au moins un état de marche,
dans lequel l'au moins un deuxième paramètre **caractérise par** ailleurs un état de fonctionnement et/ou une consommation d'énergie d'au moins un dispositif A du véhicule (2), et/ou que le procédé (100) présente par ailleurs des étapes de travail :

la fixation (106) de l'au moins un dispositif A, dont la consommation d'énergie n'est toujours pas prise en compte lors de la détermination de l'au moins une valeur caractéristique de l'efficacité énergétique du véhicule ; et
la rectification (107) de la consommation d'énergie du véhicule (2) par soustraction de la consommation d'énergie de l'au moins un dispositif.

6. Procédé (100) selon la revendication 5, **caractérisé en ce qu'**il présente par ailleurs des étapes de procédé suivantes :

la détection (113) d'une valeur théorique pour l'au moins une valeur caractéristique, en particulier sur la base d'un modèle de véhicule ou d'un véhicule de référence ;
la mise en regard (114) de la valeur caractéristique avec la valeur théorique pour définir une évaluation ;
et l'édition (115) de l'évaluation sur la base de la mise en regard (114).

7. Procédé (100) selon la revendication 5 ou 6, **caractérisé en ce que** l'au moins un deuxième paramètre est par ailleurs adapté pour caractériser une topographie d'un environnement du véhicule (2).

8. Procédé (100) selon l'une quelconque des revendications 5 à 7, **caractérisé en ce que** l'au moins un dispositif (A) est nécessaire pour le mode de marche du véhicule (2) ou remplit une fonction indépendante du mode de marche.

9. Procédé (100) selon l'une quelconque des revendications 5 à 8, **caractérisé en ce que** l'au moins un équipement d'entraînement (3) est un moteur à combustion interne ou une machine électrique avec un système de piles à combustible et le premier paramètre indique au moins une émission du moteur à combustion interne ou du système de piles à combustible.

10. Procédé selon l'une quelconque des revendications 5 à 9, **caractérisé en ce que** l'au moins un premier paramètre est adapté en plus pour caractériser une émission, une maniabilité et/ou un confort NVH [Noise, vibration and harshness - bruit, vibrations] du véhicule (2), et que le procédé présente par ailleurs l'étape de travail suivante : la sélection (112) d'au moins un mode de fonctionnement du véhicule, duquel dépend en supplément l'évaluation, parmi le groupe de modes de fonctionnement : mode de fonctionnement orienté sur l'efficacité, mode de fonctionnement orienté sur la réduction des émissions, mode de fonctionnement orienté sur la maniabilité, mode de fonctionnement orienté sur le confort NVH.

11. Procédé (100, 200) selon l'une quelconque des revendications 5 à 10, **caractérisé en ce que** les étapes de travail sont exécutées jusqu'à ce que le troisième jeu de données s'étende sur plusieurs états de marche différents.

12. Procédé (100, 200) selon l'une quelconque des revendications 5 à 11, **caractérisé en ce qu'**il présente par ailleurs l'étape de travail suivante :
la détection (108, 208) de la séquence des états de marche, dans lequel la séquence des états de marche est prise en compte lors de la détermination de la valeur caractéristique.

13. Procédé (100, 200) selon l'une quelconque des revendications 5 à 12, **caractérisé en ce que** les valeurs du premier jeu de données et/ou du deuxième jeu de données sont intégrées sur la durée de l'état de marche respectif.

14. Procédé (100, 200) selon l'une quelconque des revendications 5 à 13, **caractérisé en ce que** les valeurs de plusieurs troisièmes jeux de données pour un même type d'état de marche sont regroupées pour déterminer l'au moins une valeur caractéristique.

15. Procédé (100, 200) selon l'une quelconque des revendications 5 à 14, **caractérisé en ce qu'**il présente par ailleurs l'étape de travail suivante :
la correction (109, 209) d'une association des valeurs du premier jeu de données et du deuxième jeu de données à l'au moins état de marche prédéfini pour tenir compte d'un temps de propagation de signal et/ou d'un temps de propagation d'au moins un milieu de mesure pour détecter le jeu de données respectif jusqu'à un capteur.

16. Procédé selon l'une quelconque des revendications 5 à 15, **caractérisé en ce que** les valeurs de paramètre des jeux de données sont détectées dans un mode de conduite réelle du véhicule (2), dans lequel de manière préférée le véhicule réel parcourt un trajet réel sélectionné selon des principes stochastiques, de manière préférée un véhicule réel parcourt un trajet au moins en partie simulé sélectionné selon des principes stochastiques, de manière davantage préférée un véhicule au moins en partie simulé parcourt un trajet au moins en partie simulé sélectionné selon des principes stochastiques, et idéalement un véhicule simulé parcourt un trajet simulé sélectionné selon des principes stochastiques.

17. Procédé selon l'une quelconque des revendications 5 à 16, **caractérisé en ce qu'**une valeur caractéristique est alors déterminée seulement quand au moins un état de marche prédéfini est de mise et/ou quand le premier jeu de données et/ou le deuxième jeu de données remplissent des critères prédéfinis.

18. Programme informatique, qui présente des instructions qui, quand elles sont exécutées par un calculateur, l'amènent à exécuter un procédé selon l'une quelconque des revendications 5 à 17.

**19.** Support de stockage lisible par ordinateur, sur lequel un programme informatique selon la revendication 18 est enregistré.

**Fig. 1**

**Fig. 2**

**Fig. 3**

**Fig. 4**

**Fig. 5**

**Fig. 6**

§ Legislation

CO2
WLTP
RDE

€ Cost of Ownership

Purchase Cost

Operation Cost

Subjective Parameters

Trends

Driving Experience

Real World Driving

Fig. 7

Fig. 8

Segmentation of
Driving Events

Single Driving Elements

System Integration
Levels

Enviroment          ADAS

Traffic

Vehicle

Vehicle
Module

ICE          Battery          Controls  Powertrain
Electric Motor     Transmission              Modul

Fig. 9

Fig. 10

Fig. 11

Fig. 12

Fig. 13

Fig. 14

| OFFICE SIMULATION | XIL TEST | E-MOTOR TEST BED | BATTERY TEST BED | ENGINE TEST BED | POWER-TRAIN TEST BED | VEHICLE CD TEST BED | ROAD TEST |
|---|---|---|---|---|---|---|---|

Virtual World        Real World

MODELS

DATA MANAGEMENT (PARAMETERS AND RESULTS)

TESTCASES

## Fig. 15

Fig. 16

Fig. 17

Model Integration

(Rest) Vehicle simulation

Driver simulation

Test Maneuvers

Track simulation

Environment + traffic condition simulation

Environment Sensor

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0846945 A2
- US 7523654 B2
- DE 102009048615 A1
- WO 2014062127 A1
- US 20070112475 A1
- US 8571748 B2
- US 8155868 B1

**In der Beschreibung aufgeführte Nicht-Patentliteratur**

- **LIST, H. O.** Künftige Antriebssysteme im rasch veränderlichen globalen Umfeld. *Internationales Wiener Motorensymposium,* Mai 2009
- **LIST, H. ; SCHOEGGL, P.** Objective Evaluation of Vehicle Driveability. *SAE Technical Paper,* 1998, vol. 980204
- **FISCHER, R ; KÜPPER, K. ; SCHÖGGL, P.** Antriebsoptimierung durch Fahrzeugvernetzung. *Internationales Wiener Motorensymposium,* Mai 2014
- **BIERMAYER, W. ; THOMANN, S. ; BRANDL, F.** A Software Tool for Noise Quality and Brand Sound Development. *SAE 01NVC-138, Traverse City,* 30. April 2001
- **SCHRAUF, M. ; SCHÖGGL, P.** Objektivierung der Driveability von Automatisiertem / Autonomem Fahren. *AVL Motor und Umwelt Tagung,* 2013
- **HIROSE,T. ; SUGIURA,T. ; WECK, T ; PFISTER, F.** How To Achieve Real-Life Test Coverage Of Advanced 4-Wheel-Drive Hybrid Applications. *CTI Berlin,* 2013